# EUROPEAN PATENT APPLICATION

(11) **EP 2 663 100 A2**
(43) Date of publication of application: **13.11.2013**
(21) Application number: 13001911.0
(22) Date of filing: 12.04.2013
(51) Int. Cl.: H04W 4/02

(54) **Wi-Fi proximity considerations within single user, multiple user, multiple access, and/or MIMO wireless communications**

(30) Priority: 12.05.2012 US 201261646277 P; 07.06.2012 US 201261656963 P; 18.09.2012 US 201213621899
(71) Applicant: Broadcom Corporation, Irvine, CA 92617 (US)
(72) Inventor: Gonikberg, Mark, Los Altos Hills, CA 94022 (US); Gutierrez, Luis, San Francisco, CA 94112 (US); Forbes, Marcellus, San Francisco, CA 94114 (US); Coffey, Kelly, Los Gatos, CA 95032 (US)
(74) Representative: Jehle, Volker Armin

(57) **Abstract**

Wi-Fi proximity considerations within single user, multiple user, multiple access, and/or MIMO wireless communications. Communications between a 1^{st} wireless communication device (WDEV) (e.g., mobile) and a 2^{nd} WDEV (e.g., terminal) are effectuated using wireless local area network (WLAN) based communications. Such communications may be adaptively performed based on at least one of proximity of the 1^{st} WDEV to the 2^{nd} WDEV and a predetermined movement of the 1^{st} WDEV with respect to the 2^{nd} WDEV or an object associated with the 2^{nd} WDEV. For example, such a transaction may be effectuated between the 1^{st} WDEV and the 2^{nd} WDEV based on at least one (e.g., any one, any combination, any sub-combination, etc.) of received signal strength indicator (RSSI), angle of arrival (AoA), and time of flight (ToF) associated with at least one communication between the 1^{st} WDEV and the 2^{nd} WDEV.

## Description

### CROSS REFERENCE TO RELATED PATENTS/PATENT APPLICATIONS

### Provisional priority claims

The present U.S. Utility Patent Application claims priority pursuant to 35 U.S.C. § 119(e) to the following U.S. Provisional Patent Applications which are hereby incorporated herein by reference in their entirety and made part of the present U.S. Utility Patent Application for all purposes:
1. U.S. Provisional Patent Application Serial No. 61/646,277, entitled "Wi-Fi proximity considerations within single user, multiple user, multiple access, and/or MIMO wireless communications," (Attorney Docket No. BP30698), filed 05-12-2012, pending.
2. U.S. Provisional Patent Application Serial No. 61/656,963, entitled "Wi-Fi proximity considerations within single user, multiple user, multiple access, and/or MIMO wireless communications," (Attorney Docket No. BP30698.1), filed 06-07-2012, pending.

### Incorporation by Reference

The following IEEE standards/draft standards are hereby incorporated herein by reference in their entirety and are made part of the present U.S. Utility Patent Application for all purposes:
1. IEEE Std 802.11™ - 2012, "IEEE Standard for Information technology-Telecommunications and information exchange between systems-Local and metropolitan area networks-Specific requirements; Part 11: Wireless LAN Medium Access Control (MAC) and Physical Layer (PHY) Specifications," IEEE Computer Society, Sponsored by the LAN/MAN Standards Committee, IEEE Std 802.11™-2012, (Revision of IEEE Std 802.11-2007), 2793 total pages (incl. pp. i-xcvi, 1-2695).
2. IEEE Std 802.11n™ - 2009, "IEEE Standard for Information technology-Telecommunications and information exchange between systems-Local and metropolitan area networks-Specific requirements; Part 11: Wireless LAN Medium Access Control (MAC) and Physical Layer (PHY) Specifications; Amendment 5: Enhancements for Higher Throughput," IEEE Computer Society, IEEE Std 802.11n™-2009, (Amendment to IEEE Std 802.11™ - 2007 as amended by IEEE Std 802.11k™ - 2008, IEEE Std 802.11r™ - 2008, IEEE Std 802.11y™ - 2008, and IEEE Std 802.11r™ - 2009), 536 total pages (incl. pp. i-xxxii, 1-502).
3. IEEE P802.11aC™/D3.1, August 2012, "Draft STANDARD for Information Technology - Telecommunications and information exchange between systems - Local and metropolitan area networks - Specific requirements, Part 11: Wireless LAN Medium Access Control (MAC) and Physical Layer (PHY) specifications, Amendment 4: Enhancements for Very High Throughput for Operation in Bands below 6 GHz," Prepared by the 802.11 Working Group of the 802 Committee, 391 total pages (incl. pp. i-xxv, 1-366).
4. IEEE P802.11ad™/D9.0, July 2012, (Draft Amendment based on IEEE 802.11-2012)(Amendment to IEEE 802.11-2012 as amended by IEEE 802.11ae-2012 and IEEE 802.11aa-2012), "IEEE P802.11ad™/D9.0 Draft Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 3: Enhancements for Very High Throughput in the 60 GHz Band," Sponsor: IEEE 802.11 Committee of the IEEE Computer Society, IEEE-SA Standards Board, 679 total pages.
5. IEEE Std 802.11ae™ - 2012, "IEEE Standard for Information technology-Telecommunications and information exchange between systems-Local and metropolitan area networks-Specific requirements; Part 11: Wireless LAN Medium Access Control (MAC) and Physical Layer (PHY) Specifications," "Amendment 1: Prioritization of Management Frames," IEEE Computer Society, Sponsored by the LAN/MAN Standards Committee, IEEE Std 802.11ae™-2012, (Amendment to IEEE Std 802.11™-2012), 52 total pages (incl. pp. i-xii, 1-38).
6. IEEE P802.11af™/D1.06, March 2012, (Amendment to IEEE Std 802.11REVmb™/DI2.0 as amended by IEEE Std 802.11ae™/D8.0, IEEE Std 802.11aa™/D9.0, IEEE Std 802.11ad™/D5.0, and IEEE Std 802.11ac™/D2.0), "Draft Standard for Information Technology-Telecommunications and information exchange between systems-Local and metropolitan area networks-Specific requirements - Part 11: Wireless LAN Medium Access Control (MAC) and Physical Layer (PHY) Specifications - Amendment 5: TV White Spaces Operation," Prepared by the 802.11 Working Group of the IEEE 802 Committee, 140 total pages (incl. pp. i-xxii, 1-118).

### BACKGROUND OF THE INVENTION TECHNICAL FIELD OF THE INVENTION

The invention relates generally to communication systems; and, more particularly, it relates to communications based on proximity and/or device motion within single user, multiple user, multiple access, and/or MIMO wireless communications.

### DESCRIPTION OF RELATED ART

Communication systems are known to support wireless and wire lined communications between wireless and/or wire lined communication devices. Such communication systems range from national and/or international cellular telephone systems to the Internet to point-to-point in-home wireless networks. Each type of communication system is constructed, and hence operates, in accordance with one or more communication standards. For instance, wireless communication systems may operate in accordance with one or more standards including, but not limited to, IEEE 802.11x, Bluetooth, advanced mobile phone services (AMPS), digital AMPS, global system for mobile communications (GSM), code division multiple access (CDMA), local multi-point distribution systems (LMDS), multi-channel-multi-point distribution systems (MMDS), and/or variations thereof.

Depending on the type of wireless communication system, a wireless communication device, such as a cellular telephone, two-way radio, personal digital assistant (PDA), personal computer (PC), laptop computer, home entertainment equipment, etc., communicates directly or indirectly with other wireless communication devices. For direct communications (also known as point-to-point communications), the participating wireless communication devices tune their receivers and transmitters to the same channel or channels (e.g., one of the plurality of radio frequency (RF) carriers of the wireless communication system) and communicate over that channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switch telephone network, via the Internet, and/or via some other wide area network.

For each wireless communication device to participate in wireless communications, it includes a built-in radio transceiver (i.e., receiver and transmitter) or is coupled to an associated radio transceiver (e.g., a station for in-home and/or in-building wireless communication networks, RF modem, etc.). As is known, the receiver is coupled to the antenna and includes a low noise amplifier, one or more intermediate frequency stages, a filtering stage, and a data recovery stage. The low noise amplifier receives inbound RF signals via the antenna and amplifies them. The one or more intermediate frequency stages mix the amplified RF signals with one or more local oscillations to convert the amplified RF signal into baseband signals or intermediate frequency (IF) signals. The filtering stage filters the baseband signals or the IF signals to attenuate unwanted out of band signals to produce filtered signals. The data recovery stage recovers raw data from the filtered signals in accordance with the particular wireless communication standard.

As is also known, the transmitter includes a data modulation stage, one or more intermediate frequency stages, and a power amplifier. The data modulation stage converts raw data into baseband signals in accordance with a particular wireless communication standard. The one or more intermediate frequency stages mix the baseband signals with one or more local oscillations to produce RF signals. The power amplifier amplifies the RF signals prior to transmission via an antenna.

Typically, the transmitter will include one antenna for transmitting the RF signals, which are received by a single antenna, or multiple antennae (alternatively, antennas), of a receiver. When the receiver includes two or more antennae, the receiver will select one of them to receive the incoming RF signals. In this instance, the wireless communication between the transmitter and receiver is a single-output-single-input (SISO) communication, even if the receiver includes multiple antennae that are used as diversity antennae (i.e., selecting one of them to receive the incoming RF signals). For SISO wireless communications, a transceiver includes one transmitter and one receiver. Currently, most wireless local area networks (WLAN) that are IEEE 802.11, 802.11a, 802,11b, or 802.11g employ SISO wireless communications.

Other types of wireless communications include single-input-multiple-output (SIMO), multiple-input-single-output (MISO), and multiple-input-multiple-output (MIMO). In a SIMO wireless communication, a single transmitter processes data into radio frequency signals that are transmitted to a receiver. The receiver includes two or more antennae and two or more receiver paths. Each of the antennae receives the RF signals and provides them to a corresponding receiver path (e.g., LNA, down conversion module, filters, and ADCs). Each of the receiver paths processes the received RF signals to produce digital signals, which are combined and then processed to recapture the transmitted data.

For a multiple-input-single-output (MISO) wireless communication, the transmitter includes two or more transmission paths (e.g., digital to analog converter, filters, up-conversion module, and a power amplifier) that each converts a corresponding portion of baseband signals into RF signals, which are transmitted via corresponding antennae to a receiver. The receiver includes a single receiver path that receives the multiple RF signals from the transmitter. In this instance, the receiver uses beam forming to combine the multiple RF signals into one signal for processing.

For a multiple-input-multiple-output (MIMO) wireless communication, the transmitter and receiver each include multiple paths. In such a communication, the transmitter parallel processes data using a spatial and time encoding function to produce two or more streams of data. The transmitter includes multiple transmission paths to convert each stream of data into multiple RF signals. The receiver receives the multiple RF signals via multiple receiver paths that recapture the streams of data utilizing a spatial and time decoding function. The recaptured streams of data are combined and subsequently processed to recover the original data.

With the various types of wireless communications (e.g., SISO, MISO, SIMO, and MIMO), it would be desirable to use one or more types of wireless communications to enhance data throughput within a WLAN. For example, high data rates can be achieved with MIMO communications in comparison to SISO communications. However, most WLAN include legacy wireless communication devices (i.e., devices that are compliant with an older version of a wireless communication standard). As such, a transmitter capable of MIMO wireless communications should also be backward compatible with legacy devices to function in a majority of existing WLANs.

Therefore, a need exists for a WLAN device that is capable of high data throughput and is backward compatible with legacy devices.

### BRIEF SUMMARY OF THE INVENTION

According to an aspect, an apparatus comprises:
a mobile communication device (MD) to support wireless communications with a terminal communication device (TD) using wireless local area network (WLAN) based communications being compliant in accordance with at least one IEEE 802.11 standard; and wherein:
   the MD to operate adaptively based on proximity of the MD to the TD and a predetermined movement of the MD with respect to the TD or an object associated with the TD and to effectuate a transaction with the TD based on the predetermined movement of the MD with respect to the TD or an object associated with the TD; and
   the MD operative to awaken from a reduced power state based on the proximity of the MD to the TD being less than or equal to a threshold and to enter into the reduced power state based on the proximity of the MD to the TD being greater than the threshold or at least one additional threshold.

Advantageously:
the MD to effectuate the transaction with the TD based on at least one of received signal strength indicator (RSSI) associated with at least one communication between the MD and the TD, angle of arrival (AoA) associated with at least one communication between the MD and the TD, and time of flight (ToF) associated with at least one communication between the MD and the TD.

Advantageously:
the MD to effectuate a transaction with the TD based on at least one of received signal strength indicator (RSSI), angle of arrival (AoA), and time of flight (ToF) associated with at least one communication between the MD and the TD.

Advantageously:
the MD including at least one near field communications (NFC) antenna; and
the MD to support at least one additional wireless communications with the TD using the at least one NFC antenna.

Advantageously:
the MD is a cellular telephone, a smart phone, or a personal digital assistant (PDA); and
the TD is or is associated with a point of sale (POS) device.

According to an aspect, an apparatus comprises:
a mobile communication device (MD) to support wireless communications with a terminal communication device (TD) using wireless local area network (WLAN) based communications; and wherein:
   the MD to operate adaptively based on at least one of proximity of the MD to the TD and a predetermined movement of the MD with respect to the TD or an object associated with the TD.

Advantageously:
the MD including at least one near field communications (NFC) antenna; and
the MD to support at least one additional wireless communication with the TD using the at least one NFC antenna.

Advantageously:
the WLAN communications being compliant in accordance with at least one IEEE 802.11 standard.

Advantageously:
the MD to effectuate a transaction with the TD based on the predetermined movement of the MD with respect to the TD or an object associated with the TD.

Advantageously:
the MD to effectuate a transaction with the TD based on at least one of received signal strength indicator (RSSI), angle of arrival (AoA), and time of flight (ToF) associated with at least one communication between the MD and the TD.

Advantageously:
the MD to effectuate a transaction with the TD based on at least one of a Hall effect voltage induced within at least one of the MD and TD based on a distance between the MD and TD and angle of arrival (AoA) associated with at least one communication between the MD and the TD.

Advantageously:
the MD to awaken from a reduced power state based on the proximity of the MD to the TD being less than or equal to a threshold.

Advantageously:
the MD is a cellular telephone, a smart phone, or a personal digital assistant (PDA); and
the TD is or is associated with a point of sale (POS) device.

According to an aspect, a method is provided for operating a mobile communication device (MD), the method comprising:
supporting wireless communications with a terminal communication device (TD) using wireless local area network (WLAN) based communications; and
operating adaptively based on at least one of proximity of the MD to the TD and a predetermined movement of the MD with respect to the TD or an object associated with the TD.

Advantageously:
the MD including at least one near field communications (NFC) antenna; and further comprising:
   operating the MD to support at least one additional wireless communication with the TD using the at least one NFC antenna.

Advantageously:
the WLAN communications being compliant in accordance with at least one IEEE 802.11 standard; and further comprising:
   operating the MD to awaken from a reduced power state based on the proximity of the MD to the TD being less than or equal to a threshold and to enter into the reduced power state based on the proximity of the MD to the TD being greater than the threshold or at least one additional threshold.

Advantageously:
operating the MD to effectuate a transaction with the TD based on the predetermined movement of the MD with respect to the TD or an object associated with the TD.

Advantageously, the method further comprises:
operating the MD to effectuate a transaction with the TD based on at least one of received signal strength indicator (RSSI), angle of arrival (AoA), and time of flight (ToF) associated with at least one communication between the MD and the TD.

Advantageously, the method further comprises:
operating the MD to effectuate a transaction with the TD based on at least one of a Hall effect voltage induced within at least one of the MD and TD based on a distance between the MD and TD and angle of arrival (AoA) associated with at least one communication between the MD and the TD.

Advantageously:
the MD is a cellular telephone, a smart phone, or a personal digital assistant (PDA); and
the TD is or is associated with a point of sale (POS) device.

### BRIEF DESCRIPTION OF THE SEVERAL VIEWS OF THE DRAWINGS

FIG. 1 is a diagram illustrating an embodiment of a wireless communication system.
FIG. 2 is a diagram illustrating an embodiment of a wireless communication device.
FIG. 3 is a diagram illustrating an embodiment of an access point (AP) and multiple wireless local area network (WLAN) devices operating according to one or more various aspects and/or embodiments of the invention.
FIG. 4 is a diagram illustrating an embodiment of a wireless communication device, and clusters, as may be employed for supporting communications with at least one additional wireless communication device.
FIG. 5 illustrates an embodiment of OFDM (Orthogonal Frequency Division Multiplexing).
FIG. 6 illustrates an embodiment of near field communications (NFC) between two or more communication devices.
FIG. 7 illustrates an embodiment of wireless local area network (WLAN/Wi-Fi) communications between two or more communication devices.
FIG. 8 illustrates an embodiment of NFC and Wi-Fi communications between two or more communication devices.
FIG. 9 illustrates an embodiment of NFC swipe detection of a mobile communication device (MD).
FIG. 10 illustrates an embodiment of Wi-Fi swipe detection of a mobile communication device (MD).
FIG. 11 illustrates an embodiment of received signal strength indicator (RSSI) based proximity control.
FIG. 12 illustrates an embodiment of angle of arrival (AoA) based proximity control.
FIG. 13 illustrates an embodiment of time of flight (ToF) based proximity control.
FIG. 14 illustrates an embodiment of Hall effect based proximity control.
FIG. 15 is a diagram illustrating an embodiment of a method for operating one or more wireless communication devices.
FIG. 16 is a diagram illustrating an embodiment of establishing and effectuating communications between respective wireless communication devices operation in accordance with NFC in accordance with Wi-Fi communications.
FIG. 17 is a diagram illustrating an embodiment of establishing and effectuating communications between respective wireless communication devices operation in accordance with NFC in accordance with Wi-Fi communications and for achieving network access via at least one of the wireless communication devices.
FIG. 18, FIG. 19A, FIG. 19B, FIG. 20A, and FIG. 20B are diagrams illustrating embodiments of methods for operating one or more wireless communication devices.

### DETAILED DESCRIPTION OF THE INVENTION

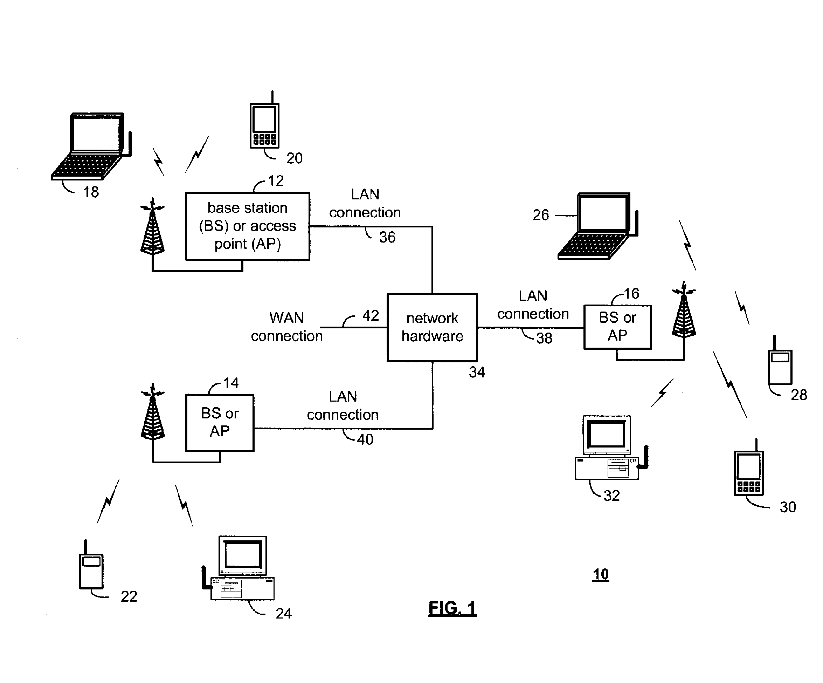

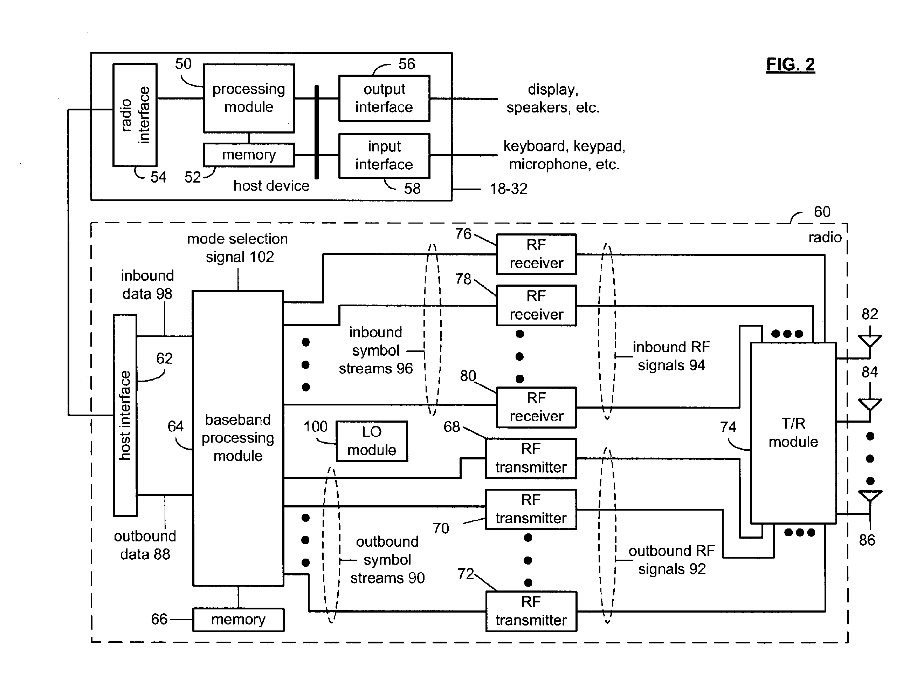

FIG. 1 is a diagram illustrating an embodiment of a wireless communication system 10 that includes a plurality of base stations and/or access points 12-16, a plurality of wireless communication devices 18-32 and a network hardware component 34. The wireless communication devices 18-32 may be laptop host computers 18 and 26, personal digital assistant hosts 20 and 30, personal computer hosts 24 and 32 and/or cellular telephone hosts 22 and 28. The details of an embodiment of such wireless communication devices are described in greater detail with reference to FIG. 2.

The base stations (BSs) or access points (APs) 12-16 are operably coupled to the network hardware 34 via local area network connections 36, 38 and 40. The network hardware 34, which may be a router, switch, bridge, modem, system controller, etc., provides a wide area network connection 42 for the communication system 10. Each of the base stations or access points 12-16 has an associated antenna or antenna array to communicate with the wireless communication devices in its area. Typically, the wireless communication devices register with a particular base station or access point 12-14 to receive services from the communication system 10. For direct connections (i.e., point-to-point communications), wireless communication devices communicate directly via an allocated channel.

Typically, base stations are used for cellular telephone systems (e.g., advanced mobile phone services (AMPS), digital AMPS, global system for mobile communications (GSM), code division multiple access (CDMA), local multi-point distribution systems (LMDS), multi-channel-multi-point distribution systems (MMDS), Enhanced Data rates for GSM Evolution (EDGE), General Packet Radio Service (GPRS), high-speed downlink packet access (HSDPA), high-speed uplink packet access (HSUPA and/or variations thereof) and like-type systems, while access points are used for in-home or in-building wireless networks (e.g., IEEE 802.11, Bluetooth, ZigBee, any other type of radio frequency based network protocol and/or variations thereof). Regardless of the particular type of communication system, each wireless communication device includes a built-in radio and/or is coupled to a radio. Such wireless communication devices may operate in accordance with the various aspects of the invention as presented herein to enhance performance, reduce costs, reduce size, and/or enhance broadband applications.

FIG. 2 is a diagram illustrating an embodiment of a wireless communication device that includes the host device 18-32 and an associated radio 60. For cellular telephone hosts, the radio 60 is a built-in component. For personal digital assistants hosts, laptop hosts, and/or personal computer hosts, the radio 60 may be built-in or an externally coupled component. For access points or base stations, the components are typically housed in a single structure.

As illustrated, the host device 18-32 includes a processing module 50, memory 52, radio interface 54, input interface 58 and output interface 56. The processing module 50 and memory 52 execute the corresponding instructions that are typically done by the host device. For example, for a cellular telephone host device, the processing module 50 performs the corresponding communication functions in accordance with a particular cellular telephone standard.

The radio interface 54 allows data to be received from and sent to the radio 60. For data received from the radio 60 (e.g., inbound data), the radio interface 54 provides the data to the processing module 50 for further processing and/or routing to the output interface 56. The output interface 56 provides connectivity to an output display device such as a display, monitor, speakers, etc. such that the received data may be displayed. The radio interface 54 also provides data from the processing module 50 to the radio 60. The processing module 50 may receive the outbound data from an input device such as a keyboard, keypad, microphone, etc. via the input interface 58 or generate the data itself. For data received via the input interface 58, the processing module 50 may perform a corresponding host function on the data and/or route it to the radio 60 via the radio interface 54.

Radio 60 includes a host interface 62, a baseband processing module 64, memory 66, a plurality of radio frequency (RF) transmitters 68-72, a transmit/receive (T/R) module 74, a plurality of antennae 82-86, a plurality of RF receivers 76-80, and a local oscillation module 100. The baseband processing module 64, in combination with operational instructions stored in memory 66, execute digital receiver functions and digital transmitter functions, respectively. The digital receiver functions include, but are not limited to, digital intermediate frequency to baseband conversion, demodulation, constellation demapping, decoding, de-interleaving, fast Fourier transform, cyclic prefix removal, space and time decoding, and/or descrambling. The digital transmitter functions, as will be described in greater detail with reference to later Figures, include, but are not limited to, scrambling, encoding, interleaving, constellation mapping, modulation, inverse fast Fourier transform, cyclic prefix addition, space and time encoding, and/or digital baseband to IF conversion. The baseband processing modules 64 may be implemented using one or more processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory 66 may be a single memory device or a plurality of memory devices. Such a memory device may be a read-only memory, random access memory, volatile memory, non-volatile memory, static memory, dynamic memory, flash memory, and/or any device that stores digital information. Note that when the processing module 64 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

In operation, the radio 60 receives outbound data 88 from the host device via the host interface 62. The baseband processing module 64 receives the outbound data 88 and, based on a mode selection signal 102, produces one or more outbound symbol streams 90. The mode selection signal 102 will indicate a particular mode as are illustrated in the mode selection tables, which appear at the end of the detailed discussion. For example, the mode selection signal 102, with reference to table 1 may indicate a frequency band of 2.4 GHz or 5 GHz, a channel bandwidth of 20 or 22 MHz (e.g., channels of 20 or 22 MHz width) and a maximum bit rate of 54 megabits-per-second. In other embodiments, the channel bandwidth may extend up to 1.28 GHz or wider with supported maximum bit rates extending to 1 gigabit-per-second or greater. In this general category, the mode selection signal will further indicate a particular rate ranging from 1 megabit-per-second to 54 megabits-per-second. In addition, the mode selection signal will indicate a particular type of modulation, which includes, but is not limited to, Barker Code Modulation, BPSK, QPSK, CCK, 16 QAM and/or 64 QAM. As is further illustrated in table 1, a code rate is supplied as well as number of coded bits per subcarrier (NBPSC), coded bits per OFDM symbol (NCBPS), data bits per OFDM symbol (NDBPS).

The mode selection signal may also indicate a particular channelization for the corresponding mode which for the information in table 1 is illustrated in table 2. As shown, table 2 includes a channel number and corresponding center frequency. The mode select signal may further indicate a power spectral density mask value which for table 1 is illustrated in table 3. The mode select signal may alternatively indicate rates within table 4 that has a 5 GHz frequency band, 20 MHz channel bandwidth and a maximum bit rate of 54 megabits-per-second. If this is the particular mode select, the channelization is illustrated in table 5. As a further alternative, the mode select signal 102 may indicate a 2.4 GHz frequency band, 20 MHz channels and a maximum bit rate of 192 megabits-per-second as illustrated in table 6. In table 6, a number of antennae may be utilized to achieve the higher bit rates. In this instance, the mode select would further indicate the number of antennae to be utilized. Table 7 illustrates the channelization for the set-up of table 6. Table 8 illustrates yet another mode option where the frequency band is 2.4 GHz, the channel bandwidth is 20 MHz and the maximum bit rate is 192 megabits-per-second. The corresponding table 8 includes various bit rates ranging from 12 megabits-per-second to 216 megabits-per-second utilizing 2-4 antennae and a spatial time encoding rate as indicated. Table 9 illustrates the channelization for table 8. The mode select signal 102 may further indicate a particular operating mode as illustrated in table 10, which corresponds to a 5 GHz frequency band having 40 MHz frequency band having 40 MHz channels and a maximum bit rate of 486 megabits-per-second. As shown in table 10, the bit rate may range from 13.5 megabits-per-second to 486 megabits-per-second utilizing 1-4 antennae and a corresponding spatial time code rate. Table 10 further illustrates a particular modulation scheme code rate and NBPSC values. Table 11 provides the power spectral density mask for table 10 and table 12 provides the channelization for table 10.

It is of course noted that other types of channels, having different bandwidths, may be employed in other embodiments without departing from the scope and spirit of the invention. For example, various other channels such as those having 80 MHz, 120 MHz, and/or 160 MHz of bandwidth may alternatively be employed such as in accordance with IEEE Task Group ac (TGac VHTL6).

The baseband processing module 64, based on the mode selection signal 102 produces the one or more outbound symbol streams 90 from the output data 88. For example, if the mode selection signal 102 indicates that a single transmit antenna is being utilized for the particular mode that has been selected, the baseband processing module 64 will produce a single outbound symbol stream 90. Alternatively, if the mode select signal indicates 2, 3 or 4 antennae, the baseband processing module 64 will produce 2, 3 or 4 outbound symbol streams 90 corresponding to the number of antennae from the output data 88.

Depending on the number of outbound streams 90 produced by the baseband module 64, a corresponding number of the RF transmitters 68-72 will be enabled to convert the outbound symbol streams 90 into outbound RF signals 92. The transmit/receive module 74 receives the outbound RF signals 92 and provides each outbound RF signal to a corresponding antenna 82-86.

When the radio 60 is in the receive mode, the transmit/receive module 74 receives one or more inbound RF signals via the antennae 82-86. The T/R module 74 provides the inbound RF signals 94 to one or more RF receivers 76-80. The RF receiver 76-80 converts the inbound RF signals 94 into a corresponding number of inbound symbol streams 96. The number of inbound symbol streams 96 will correspond to the particular mode in which the data was received (recall that the mode may be any one of the modes illustrated in tables 1-12). The baseband processing module 64 receives the inbound symbol streams 90 and converts them into inbound data 98, which is provided to the host device 18-32 via the host interface 62.

In one embodiment of radio 60 it includes a transmitter and a receiver. The transmitter may include a MAC module, a PLCP module, and a PMD module. The Medium Access Control (MAC) module, which may be implemented with the processing module 64, is operably coupled to convert a MAC Service Data Unit (MSDU) into a MAC Protocol Data Unit (MPDU) in accordance with a WLAN protocol. The Physical Layer Convergence Procedure (PLCP) Module, which may be implemented in the processing module 64, is operably coupled to convert the MPDU into a PLCP Protocol Data Unit (PPDU) in accordance with the WLAN protocol. The Physical Medium Dependent (PMD) module is operably coupled to convert the PPDU into a plurality of radio frequency (RF) signals in accordance with one of a plurality of operating modes of the WLAN protocol, wherein the plurality of operating modes includes multiple input and multiple output combinations.

An embodiment of the Physical Medium Dependent (PMD) module includes an error protection module, a demultiplexing module, and a plurality of direction conversion modules. The error protection module, which may be implemented in the processing module 64, is operably coupled to restructure a PPDU (PLCP (Physical Layer Convergence Procedure) Protocol Data Unit) to reduce transmission errors producing error protected data. The demultiplexing module is operably coupled to divide the error protected data into a plurality of error protected data streams The plurality of direct conversion modules is operably coupled to convert the plurality of error protected data streams into a plurality of radio frequency (RF) signals.

As one of average skill in the art will appreciate, the wireless communication device of FIG. 2 may be implemented using one or more integrated circuits. For example, the host device may be implemented on one integrated circuit, the baseband processing module 64 and memory 66 may be implemented on a second integrated circuit, and the remaining components of the radio 60, less the antennae 82 - 86, may be implemented on a third integrated circuit. As an alternate example, the radio 60 may be implemented on a single integrated circuit. As yet another example, the processing module 50 of the host device and the baseband processing module 64 may be a common processing device implemented on a single integrated circuit. Further, the memory 52 and memory 66 may be implemented on a single integrated circuit and/or on the same integrated circuit as the common processing modules of processing module 50 and the baseband processing module 64.

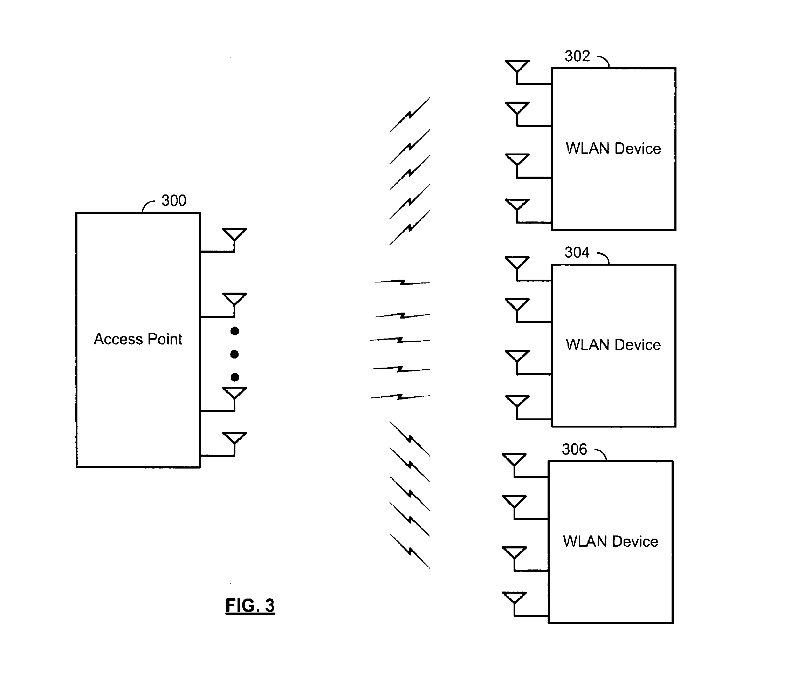

FIG. 3 is a diagram illustrating an embodiment of an access point (AP) and multiple wireless local area network (WLAN) devices operating according to one or more various aspects and/or embodiments of the invention. The AP point 300 may compatible with any number of communication protocols and/or standards, e.g., IEEE 802.11(a), IEEE 802.11(b), IEEE 802.11(g), IEEE 802.11(n), as well as in accordance with various aspects of invention. According to certain aspects of the present invention, the AP supports backwards compatibility with prior versions of the IEEE 802.11x standards as well. According to other aspects of the present invention, the AP 300 supports communications with the WLAN devices 302, 304, and 306 with channel bandwidths, MIMO dimensions, and at data throughput rates unsupported by the prior IEEE 802.11x operating standards. For example, the access point 300 and WLAN devices 302, 304, and 306 may support channel bandwidths from those of prior version devices and from 40 MHz to 1.28 GHz and above. The access point 300 and WLAN devices 302, 304, and 306 support MIMO dimensions to 4×4 and greater. With these characteristics, the access point 300 and WLAN devices 302, 304, and 306 may support data throughput rates to 1 GHz and above.

The AP 300 supports simultaneous communications with more than one of the WLAN devices 302, 304, and 306. Simultaneous communications may be serviced via OFDM tone allocations (e.g., certain number of OFDM tones in a given cluster), MIMO dimension multiplexing, or via other techniques. With some simultaneous communications, the AP 300 may allocate one or more of the multiple antennae thereof respectively to support communication with each WLAN device 302, 304, and 306, for example.

Further, the AP 300 and WLAN devices 302, 304, and 306 are backwards compatible with the IEEE 802.11 (a), (b), (g), and (n) operating standards. In supporting such backwards compatibility, these devices support signal formats and structures that are consistent with these prior operating standards.

Generally, communications as described herein may be targeted for reception by a single receiver or for multiple individual receivers (e.g. via multi-user multiple input multiple output (MU-MIMO), and/or OFDMA transmissions, which are different than single transmissions with a multi-receiver address). For example, a single OFDMA transmission uses different tones or sets of tones (e.g., clusters or channels) to send distinct sets of information, each set of set of information transmitted to one or more receivers simultaneously in the time domain. Again, an OFDMA transmission sent to one user is equivalent to an OFDM transmission (e.g., OFDM may be viewed as being a subset of OFDMA). A single MU-MIMO transmission may include spatially-diverse signals over a common set of tones, each containing distinct information and each transmitted to one or more distinct receivers. Some single transmissions may be a combination of OFDMA and MU-MIMO. Multi-user (MU), as described herein, may be viewed as being multiple users sharing at least one cluster (e.g., at least one channel within at least one band) at a same time.

MIMO transceivers illustrated may include SISO, SIMO, and MISO transceivers. The clusters employed for such communications (e.g., OFDMA communications) may be continuous (e.g., adjacent to one another) or discontinuous (e.g., separated by a guard interval of band gap). Transmissions on different OFDMA clusters may be simultaneous or non-simultaneous. Such wireless communication devices as described herein may be capable of supporting communications via a single cluster or any combination thereof. Legacy users and new version users (e.g., TGac MU-MIMO, OFDMA, MU-MIMO/OFDMA, etc.) may share bandwidth at a given time or they can be scheduled at different times for certain embodiments. Such a MU-MIMO/OFDMA transmitter (e.g., an AP or a STA) may transmit packets to more than one receiving wireless communication device (e.g., STA) on the same cluster (e.g., at least one channel within at least one band) in a single aggregated packet (such as being time multiplexed). In such an instance, channel training may be required for all communication links to the respective receiving wireless communication devices (e.g., STAs).

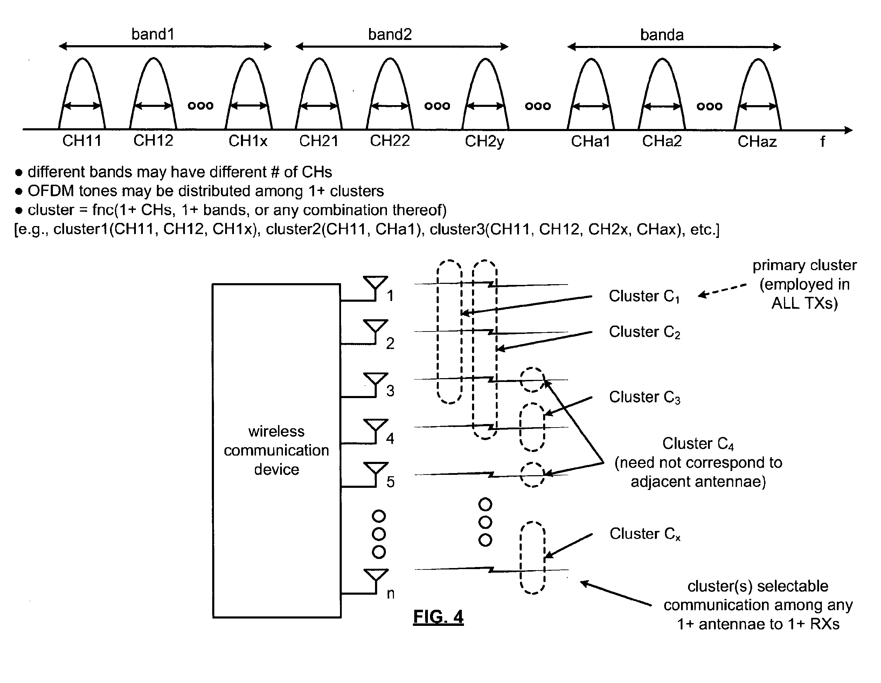

FIG. 4 is a diagram illustrating an embodiment of a wireless communication device, and clusters, as may be employed for supporting communications with at least one additional wireless communication device. Generally speaking, a cluster may be viewed as a depiction of the mapping of tones, such as for an OFDM symbol, within or among one or more channels (e.g., sub-divided portions of the spectrum) that may be situated in one or more bands (e.g., portions of the spectrum separated by relatively larger amounts). As an example, various channels of 20 MHz may be situated within or centered around a 5 GHz band. The channels within any such band may be continuous (e.g., adjacent to one another) or discontinuous (e.g., separated by some guard interval or band gap). Oftentimes, one or more channels may be situated within a given band, and different bands need not necessarily have a same number of channels therein. Again, a cluster may generally be understood as any combination one or more channels among one or more bands.

The wireless communication device of this diagram may be of any of the various types and/or equivalents described herein (e.g., AP, WLAN device, or other wireless communication device including, though not limited to, any of those depicted in FIG. 1, etc.). The wireless communication device includes multiple antennae from which one or more signals may be transmitted to one or more receiving wireless communication devices and/or received from one or more other wireless communication devices.

Such clusters may be used for transmissions of signals via various one or more selected antennae. For example, different clusters are shown as being used to transmit signals respectively using different one or more antennae.

Also, it is noted that, with respect to certain embodiments, general nomenclature may be employed wherein a transmitting wireless communication device (e.g., such as being an Access point (AP), or a wireless station (STA) operating as an 'AP' with respect to other STAs) initiates communications, and/or operates as a network controller type of wireless communication device, with respect to a number of other, receiving wireless communication devices (e.g., such as being STAs), and the receiving wireless communication devices (e.g., such as being STAs) responding to and cooperating with the transmitting wireless communication device in supporting such communications. Of course, while this general nomenclature of transmitting wireless communication device(s) and receiving wireless communication device(s) may be employed to differentiate the operations as performed by such different wireless communication devices within a communication system, all such wireless communication devices within such a communication system may of course support bi-directional communications to and from other wireless communication devices within the communication system. In other words, the various types of transmitting wireless communication device(s) and receiving wireless communication device(s) may all support bi-directional communications to and from other wireless communication devices within the communication system. Generally speaking, such capability, functionality, operations, etc. as described herein may be applied to any wireless communication device.

Various aspects and principles, and their equivalents, of the invention as presented herein may be adapted for use in various standards, protocols, and/or recommended practices (including those currently under development) such as those in accordance with IEEE 802.11x (e.g., where x is a, b, g, n, ac, ad, ae, af, ah, etc.).

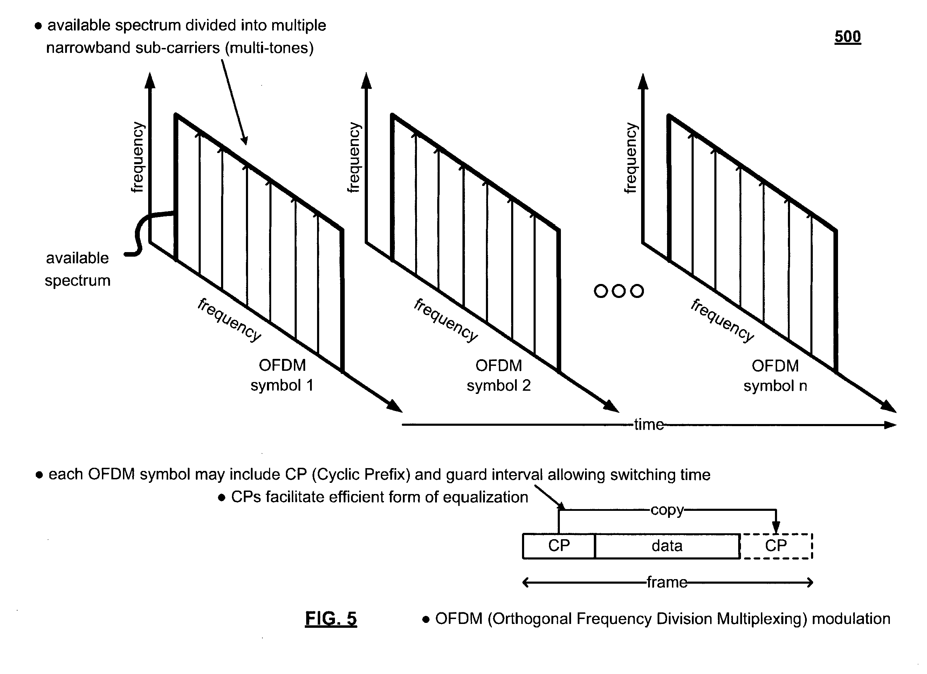

FIG. 5 illustrates an embodiment 500 of OFDM (Orthogonal Frequency Division Multiplexing). OFDM modulation may be viewed a dividing up an available spectrum into a plurality of narrowband sub-carriers (e.g., lower data rate carriers). Typically, the frequency responses of these sub-carriers are overlapping and orthogonal. Each sub-carrier may be modulated using any of a variety of modulation coding techniques.

OFDM modulation operates by performing simultaneous transmission of a larger number of narrowband carriers (or multi-tones). Oftentimes a guard interval (GI) or guard space is also employed between the various OFDM symbols to try to minimize the effects of ISI (Inter-Symbol Interference) that may be caused by the effects of multi-path within the communication system (which can be particularly of concern in wireless communication systems). In addition, a CP (Cyclic Prefix) may also be employed within the guard interval to allow switching time (when jumping to a new band) and to help maintain orthogonality of the OFDM symbols. Generally speaking, OFDM system design is based on the expected delay spread within the communication system (e.g., the expected delay spread of the communication channel).

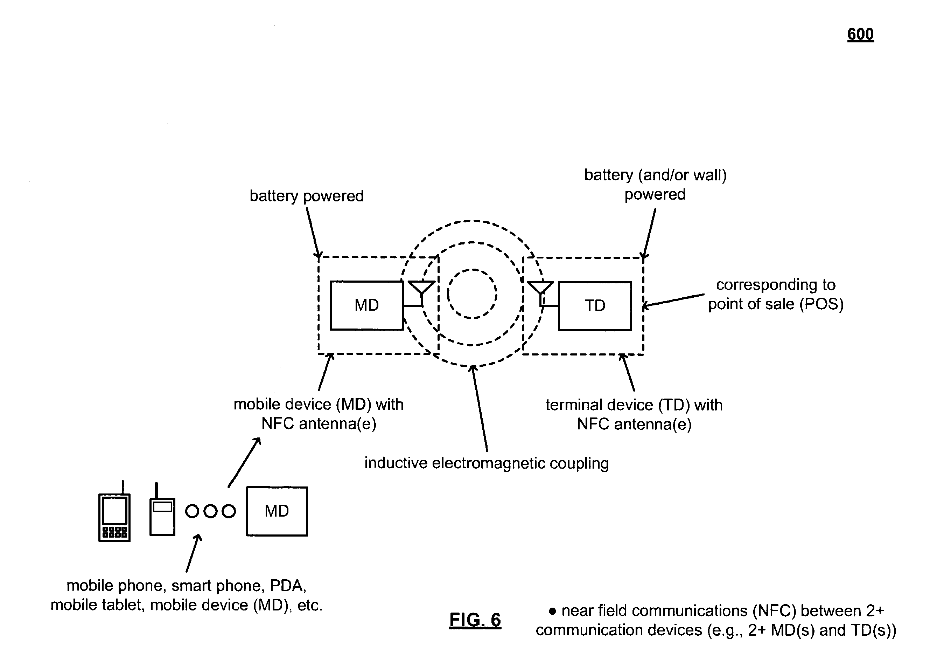

FIG. 6 illustrates an embodiment 600 of near field communications (NFC) between two or more communication devices. NFC may generally be viewed as communications effectuated using a mobile communication device (MD) with one or more other communication devices. For example, one of these other communication devices may be a terminal device (TD) via which the MD can perform any of a number of applications. Such an MD may be implemented using any of a variety of platforms including cellular telephones, personal digital assistants, smart phones, mobile tablets, and/or any other type of device that may effectuate wireless communications.

Examples of such applications as may be supported using such a MD and TD may include contactless transactions, data exchange, network access (e.g., such as with the Internet), and/or other types of communications. Generally speaking, such NFC is effectuated via inductive electromagnetic coupling between one or more NFC antennae within the MD and one or more NFC antennae within the TD. The implementation of such NFC antennae within mobile type devices may present certain challenges, in that, a given NFC antenna can be of relatively large size (e.g., occupying a relatively large amount of real estate within such a mobile device), and the respective placement of one or more such NFC antennae within a mobile device may be difficult. For example, to effectuate appropriate NFC with other devices, the one or more NFC antennae typically should be placed at a location most facilitative of effectuating communications with the TD as the mobile device undergoes a tap, swipe, and/or any other predetermined motion or action with reference to the TD.

Generally speaking, such mobile devices are typically battery-powered. A terminal device may be battery and/or wall powered. That is to say, such a terminal device may be tied into electric power system receiving a very reliable, predictable, clean, etc. power supply voltage (e.g., 120 V AC at 60 Hz). However, in certain instances, such a terminal device may also be battery-powered.

As described above, a number of different applications may be supported between an MD in the TD. In one embodiment, the TD corresponds to a point of sale (POS) device. As such, a user of the mobile device may effectuate a transaction with the TD using the mobile device itself (e.g., such that the mobile device undergoes eight tap, swipe, and/or any other predetermined motion or action with reference to the TD, such as effectuated by the user of the mobile device). As such, a user of the mobile device need not effectuate such a transaction using currency, credit card, debit card, etc., but instead the user of the mobile device may effectuate the transaction using the mobile device itself. As may be understood with respect to such communications between a mobile device and the terminal device, given that such a mobile device will typically be a non-passive device operative using energy provided from a battery (e.g., which of course may be powered using a power supply voltage such as 120 V AC at 60 Hz). In contrast to certain communications operating in accordance with radiofrequency identification (RFID) technology in which a tag may be a nonpowered/passive device, such a mobile device, being battery energized, is not really a nonpowered/passive device.

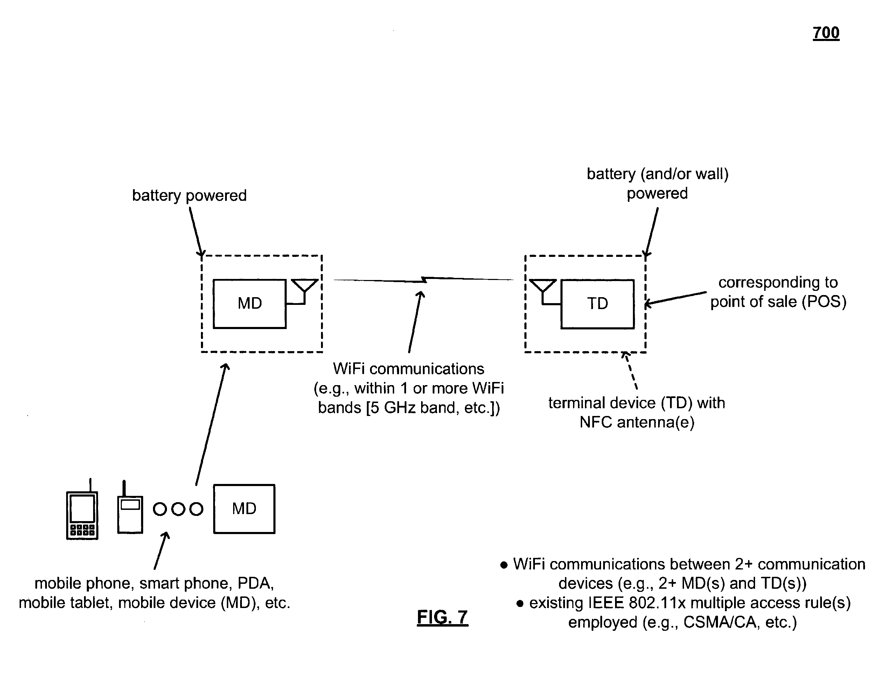

FIG. 7 illustrates an embodiment 700 of wireless local area network (WLAN/Wi-Fi) communications between two or more communication devices. Given at least some of the characteristics associated with the mobile device being battery-powered, and given that such a mobile device is not typically a nonpowered/passive device, communications may be effectuated between such a mobile device and a terminal device using wireless local area network (WLAN/Wi-Fi) based communications. Generally speaking, such Wi-Fi-based communications may be performed in accordance with any desired WLAN related communication standard, protocol, and/or recommended practice, including those described above with reference to any IEEE 802.11 related standard and/or draft standard, including, but not limited to, various standards, protocols, and/or recommended practices (including those currently under development) such as those in accordance with IEEE 802.11x (e.g., where x is a, b, g, n, ac, ad, ae, af, ah, etc.). As desired, with respect to gaining communication medium access, any one or more of existing multiple access rules may be used in accordance with operation based on any IEEE 802.11 related standard and/or draft standard, including, but not limited to, various standards, protocols, and/or recommended practices (e.g., carrier sense multiple access/collision avoidance (CSMA/CA), etc.).

In one possible preferred embodiment, certain NFC use cases may be implemented using RF technology within an unlicensed frequency band. For example, WLAN related communications may be supported using the unlicensed 5 GHz band. As such, certain NFC related operations may instead be performed using Wi-Fi-based communications (e.g., such as using the unlicensed 5 GHz band). It is of course noted that any of a variety of types of technology may be effectuated using Wi-Fi-based communications to ensure secure communications, secure transactions, etc. (e.g., such as exchanging secure keys between devices, using a service interface module (SIM) processor, use of an embedded secure element (eSE) that maybe independent and not necessarily coupled to were operative in accordance with NFC, etc.). Generally speaking, any of a number of desired means may be employed to effectuate secure communications between a mobile device and a terminal device.

As may be understood within such an implementation in which NFC use cases are instead implemented using Wi-Fi-based communications, the need for one or more NFC antennae may be obviated. It is noted that while NFC is one of a number of possible communication means by which such connectivity may be achieved, any of a number of different alternative communication means may be employed instead of or in conjunction with NFC. That is to say, a given device may be provisioned to include appropriate circuitry, functionality, etc. to support communications in accordance with NFC, Wi-Fi-based communications, and/or other communication means.

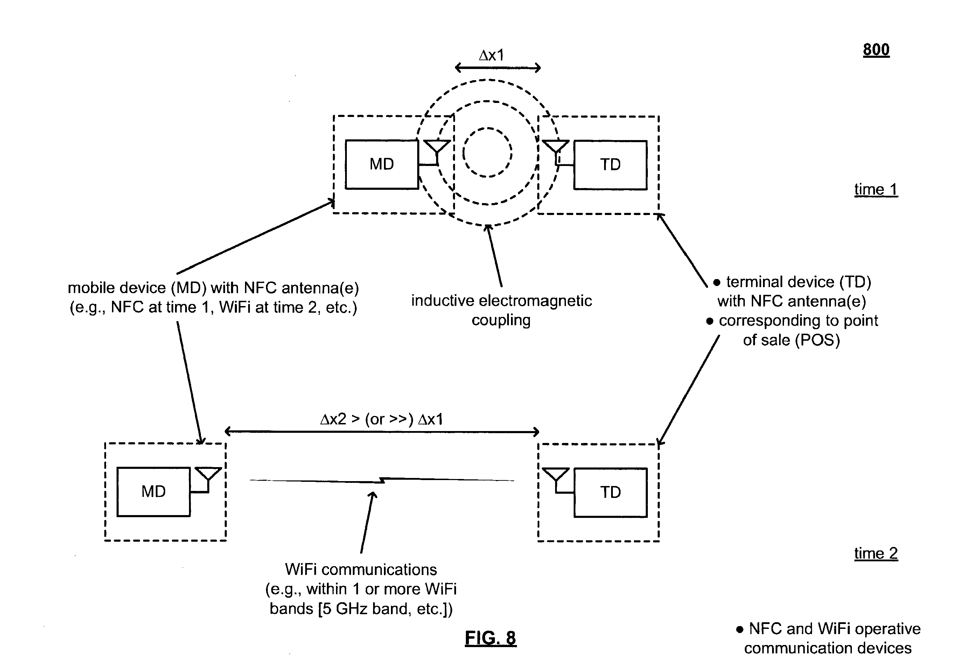

FIG. 8 illustrates an embodiment 800 of NFC and Wi-Fi communications between two or more communication devices. As may be seen with respect to this diagram, a given mobile device and/or terminal device may be provision to include support appropriate circuitry, functionality, etc. to support communications in accordance with both NFC and Wi-Fi-based communications. As can be seen with respect to this diagram, a given mobile device may operate in accordance with NFC when located within a given proximity of the terminal device, and that same mobile device may operate in accordance with Wi-Fi-based communications when located beyond a given proximity of the terminal device. As may be understood, the terminal device will also include the appropriate circuitry, functionality, etc. to support communications in accordance with both NFC and Wi-Fi-based communications in order to effectuate bidirectional communications with the mobile device using these various communication means. As may be understood, a device including functionality to span and cover different respective communication means can allow for the implementation of NFC use cases not only using NFC, but also using Wi-Fi-based communications.

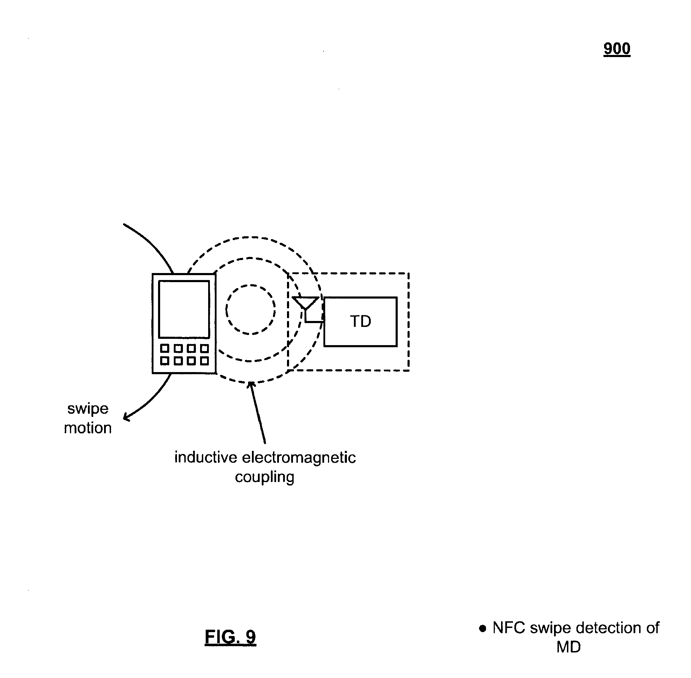

FIG. 9 illustrates an embodiment 900 of NFC swipe detection of a mobile communication device (MD). As may be seen with respect to this diagram, swipe detection of the mobile device may be detected by a terminal device in accordance with NFC. That is to say, as a user moves the mobile device undergoes a tap, swipe, and/or any other predetermined motion or action with reference to the terminal device, the terminal device can detect such a movement of the mobile device. Such movement may be used to effectuate any desired application including those referenced above such as transactions, etc.

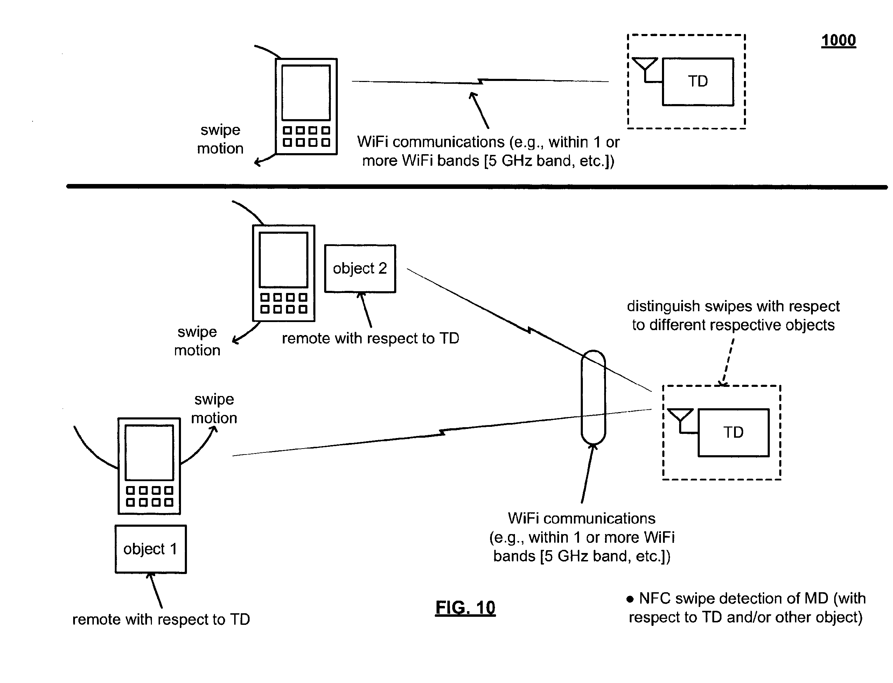

FIG. 10 illustrates an embodiment 1000 of Wi-Fi swipe detection of a mobile communication device (MD). As may be seen with respect to this diagram, and analogous NFC use applications such as a swipe of a mobile device with reference to a terminal device may instead be detected based upon Wi-Fi-based communications. Any of a number of number of different means may be employed to determine and attacked that the mobile device has undergone such a swipe motion (e.g., or generally, a tap, swipe, and/or any other predetermined motion or action).

As may be seen with respect to the top portion of this diagram, such a motion may be detected with reference to a terminal device. However, as may be seen with respect to a lower part of the diagram, such a motion may instead be detected with reference to a given object remotely located with respect to the terminal device. That is to say, determination may be made by the terminal device that the mobile device has undergone an appropriate motion with reference to an object remotely located with respect the terminal device. In certain alternative embodiments, communications or effectuated between such an object and the terminal device as well. That is to say, the mobile device may interact communicatively with an object remotely located with respect to the terminal device, and the terminal device may operate to forward or relay such communications to the terminal device. Generally speaking, in such an implementation, communications may be viewed as being effectuated between at least three respective devices, namely, the mobile device, the object remotely located with respect to the terminal device, and the terminal device.

As may be understood also with respect to this diagram, the terminal device is implemented to distinguish a motion associated with a first object remotely located with respect to the terminal device and a second object remotely located with respect to the terminal device. That is to say, in such an application context, the terminal device is operative to distinguish the particular remotely located object with which the motion of the terminal device is being performed and associated. For example, in one possible application context in which a mobile device is employed to effectuate different respective transactions within a certain locale, different respective motions of the mobile device with respect to different respective objects within the locale will effectuate different respective transactions corresponding respectively to those different respective objects within the locale.

As may be understood with respect to various embodiments and/or diagrams herein, proximity control is effectuated such that a given mobile device interacts with such a terminal device in the appropriate situations and at the appropriate times. That is to say, such communication may be effectuated when the mobile device enters within a sufficiently close proximity to the terminal device. For example, such proximity-based operation ensures that a transaction would not be effectuated if the mobile device does not come within sufficient proximity to the terminal device. However, as may be described with respect to the bottom portion of this diagram, there may be certain instances in which a much extended range of operation beyond typical NFC may be desirable (e.g., such as for a customer to peruse through a shop and effectuate transactions respectively two different respective objects therein remotely located with respect to a terminal device). Again, with respect to proximity control based upon these remotely located objects, discrimination is provided such that the motion of the mobile device is clearly and reliably associated with the appropriate objects remotely located from the terminal device with which a user interacts via such a mobile device (e.g., such as by a user initiated tap or swipe action of the mobile device with respect to one or more objects remotely located with respect to the terminal device).

As such, both the mobile device and the terminal device operate to effectuate and control the range that is appropriate for valid transactions. Operating using Wi-Fi-based communications (e.g., such as those in accordance with the unlicensed 5 GHz band) may be performed to extend the range of such NFC use type applications. Again, appropriate mobile device motion emulation can be performed for transaction initiation (e.g., such that Wi-Fi-based communications may appropriately be understood for effectuating such transactions between one or more mobile devices and one or more terminal devices).

As may also be understood with respect to supporting Wi-Fi-based communications, appropriate power saving operational modes may be desirable to prolong the useful operational time of the mobile device. That is to say, the radio such a mobile device may be powered off, entered into a relatively lower power mode, etc. except when the mobile device is facilitating a transaction. Also, operation in accordance with such Wi-Fi-based communications is performed such as to minimize interference with other communications that may be according within the environment of the mobile device and the terminal device. That is to say, operation in accordance with such Wi-Fi-based communications operates to ensure that interference is mitigated between different respective mobile devices and different respective terminal devices (e.g., such as in accordance with certain applications that may include a number of respective mobile devices and/or terminal devices). Moreover, the duration of such transactions may be effectuated in less than one second; that is to say, the entire duration required to effectuate such a transaction process occurs in a nominal period of time that is essentially imperceptible to a user of such a mobile device (e.g., the duration of the transaction is less than the time period required for a user of the mobile device to effectuate the appropriate motion of the mobile device with reference to the terminal device). Such fast operation can be supported using Wi-Fi-based communications that provide very high data rates (e.g., such as those operating in accordance with the unlicensed 5 GHz band). In addition, given the various means by which security may be achieved in accordance with Wi-Fi-based communications, security may be ensured at least as good if not better than that which may be provided in accordance with NFC.

With respect to implementing appropriate proximity control, any of a number of respective means may be employed, including various means described below such as received signal strength indicator (RSSI) based proximity control, angle of arrival (AoA) based proximity control, and time of flight (ToF) based proximity control.

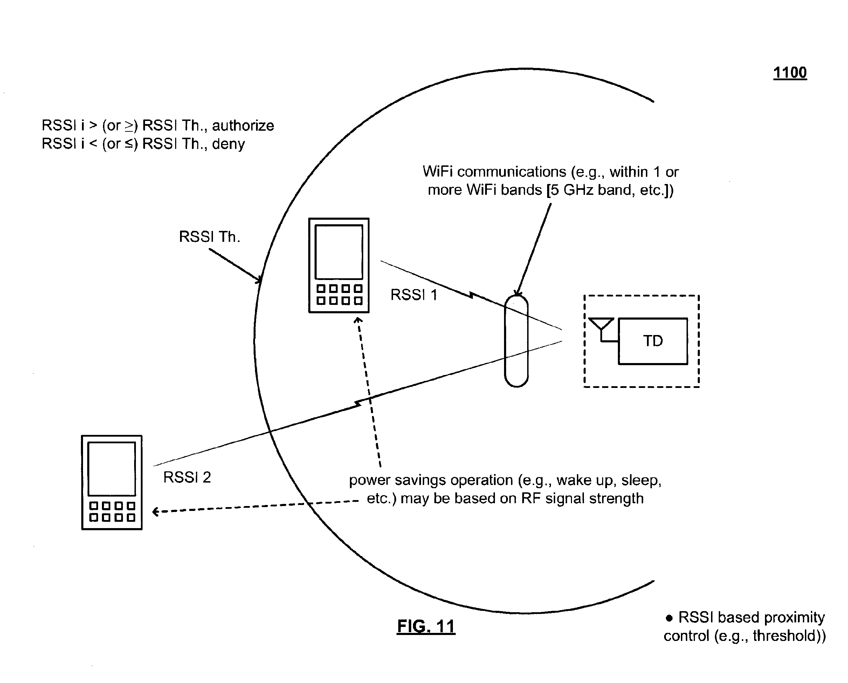

FIG. 11 illustrates an embodiment 1100 of received signal strength indicator (RSSI) based proximity control. As may be seen with respect to this diagram, the use of a threshold may be employed to determine whether or not a given transaction is to be authorized or denied. That is to say, only if the RSSI associated with communications between the mobile device and the terminal device is above a particular threshold will the transaction be authorized. If the RSSI associated with those communications between the mobile device and the terminal devices below that threshold, then the transaction will be denied.

In addition, use of signal strength or RSSI may be employed for use in other applications including those associated with power savings operation (e.g., wake up, sleep, etc.). That is to say, based upon the associated signal strength or RSSI of communications between the mobile device and the terminal device, the mobile device may enter into or exit from an appropriate power savings operational mode.

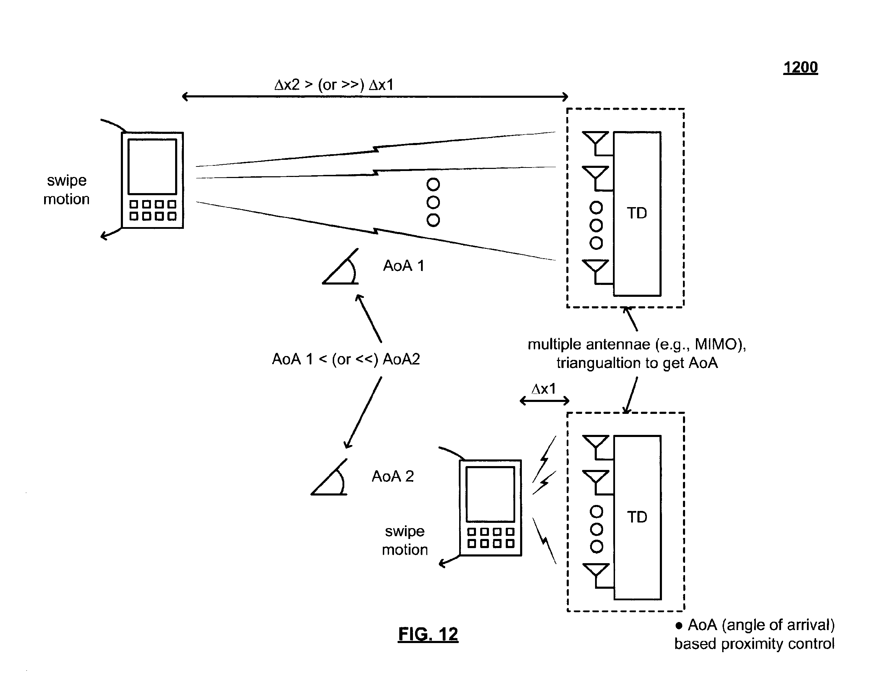

FIG. 12 illustrates an embodiment 1200 of angle of arrival (AoA) based proximity control. Within certain applications, either one or both of a mobile device and the terminal device may include more than one antennae. For example, in accordance with such multi-antennae communications (e.g., MIMO applications), the angle of arrival associated with communications between the mobile device and the terminal device may be determined in accordance with triangulation. Moreover, based upon an appropriate motion of the mobile device with respect to the terminal device, the angle of arrival associated with those communications between the mobile device and the terminal device will have certain characteristics. Generally speaking, if the mobile device is relatively far from the terminal device, then the angle of arrival associated with such communications will change relatively little (e.g., the angle of arrival of a first motion associated with the first communication and the angle of arrival of a second motion associate with the second communication will be essentially the same, or at least very close to one another).

Alternatively, if the mobile device is relatively close to the terminal device, then the angle of arrival associated with such communications will vary significantly (e.g., the angle of arrival of a first motion associated with the first communication and the angle of arrival of a second motion associate with the second communication will typically be very different from one another). As such, analysis and comparison of different respective angles of arrival associated with different respective communications associate with different respective motions of the mobile device with respect to the terminal device may be used to estimate and/or determine the relative distance of the mobile device from the terminal device.

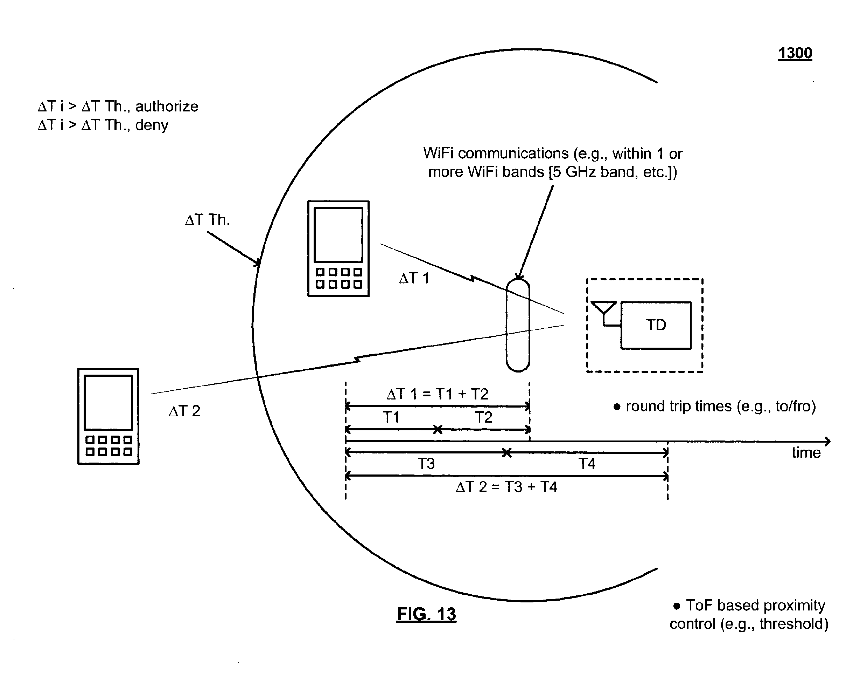

FIG. 13 illustrates an embodiment 1300 of time of flight (ToF) based proximity control. As may be seen with respect to this diagram, monitoring and determination of the duration of communications between the mobile device and the terminal device may be used to determine the relative distance of the mobile device from the terminal device. For example, in accordance with Wi-Fi-based communications, the round-trip time of communications to and from one another may be used to determine the relative distance between the mobile device and the terminal device.

As may be understood with respect to these and/or other means of determining relative position (e.g., and/or absolute position or location such as in accordance with global positioning system technology (GPS)), any desired combination of two or more position and/or location determining technologies may also be combined to create an even more effective means by which to control transaction range. As may be understood, employing more than one such position and/or location determining technology may provide for greater precision in terms of proximity-based control of transactions.

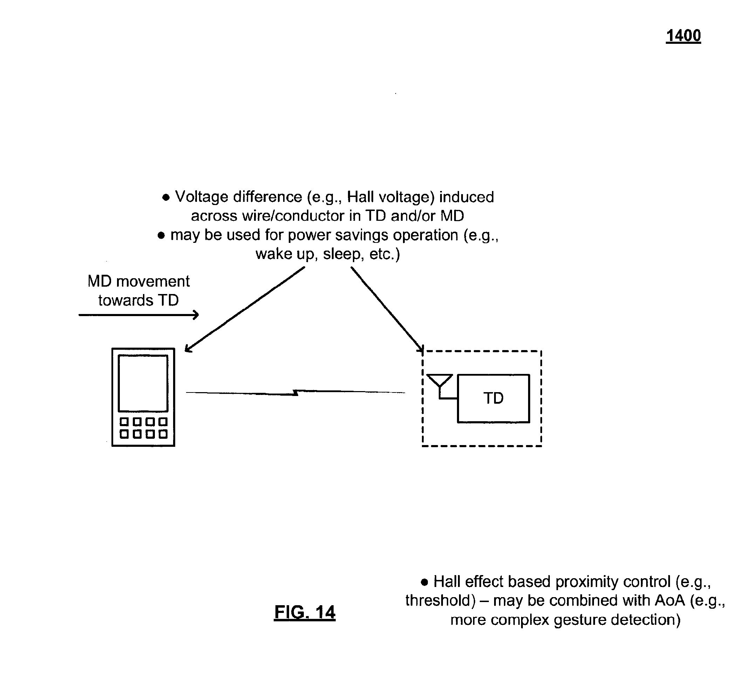

FIG. 14 illustrates an embodiment 1400 of Hall effect based proximity control. Also, in certain alternative embodiments, a Hall effect sensor may be combined with angle of arrival detection technologies to assist in detection of tap, swipe, and/or other predetermined mobile device motion with reference to a terminal device. As may be understood, the Hall effect may be viewed as the production of a voltage difference (e.g., sometimes referred to as the Hall voltage) across a wire/conductor in one or both of the terminal device and the mobile device, such that the voltage difference is incurred transverse to an electric current in the wire/conductor and a magnetic field is incurred perpendicular to the electric current. By using a combination of a Hall effect sensor and angle of arrival detection, relatively more complex gestures could also be detective is needed (e.g., relatively more complex gestures beyond tap, swipe, etc.). In addition, the use of such Hall effect detection (or magnetic sensing detection) may be used to detect that the mobile device is approaching the terminal device. Such operation in accordance with a Hall effect sensor may be used not only for proximity-based control purposes, but may also be used for power savings operation (e.g., wake up, sleep, etc.). Also, such operation in accordance with a Hall effect sensor may be used for mutual enabling of wake-up of both the mobile device and the terminal device.

With respect to operation in accordance with certain power savings operation, a radio within a mobile device and/or terminal device may be designed to wake up one or more other components therein when a relatively strong RF signal is detected (e.g., when a relatively strong beacon is detected by the radio). As may be understood, such a radio may be implemented to assist with and complement proximity control to wake up one or more other portions of the device when such a strong beacon is detected, and alternatively keeping it in a sleep mode or a reduced power mode at other times.

As has also been described elsewhere herein, operation in accordance with such Wi-Fi-based communications may be effectuated using any IEEE 802.11 related standard and/or draft standard, including, but not limited to, various standards, protocols, and/or recommended practices (e.g., carrier sense multiple access/collision avoidance (CSMA/CA) such as in situations in which multiple respective devices can effectuate transactions on the same channel in accordance with one or more such communication medium sharing mechanisms, etc.). That is to say, packet-based communications in accordance with any such IEEE 802.11 related standard and/or draft standard may be supported in accordance with such Wi-Fi-based communications. Such Wi-Fi-based communications may allow such transactions to be done at relatively low power limiting co-channel and adjacent channel interference. For example, in accordance with operation within the unlicensed 5 GHz band, 24 respective 20 MHz channels are available. If desired, and appropriate channel selection and means may be employed by mobile devices and/or terminal devices to minimize interference (e.g., which may be implemented using one or more proprietary adaptive channel selection means).

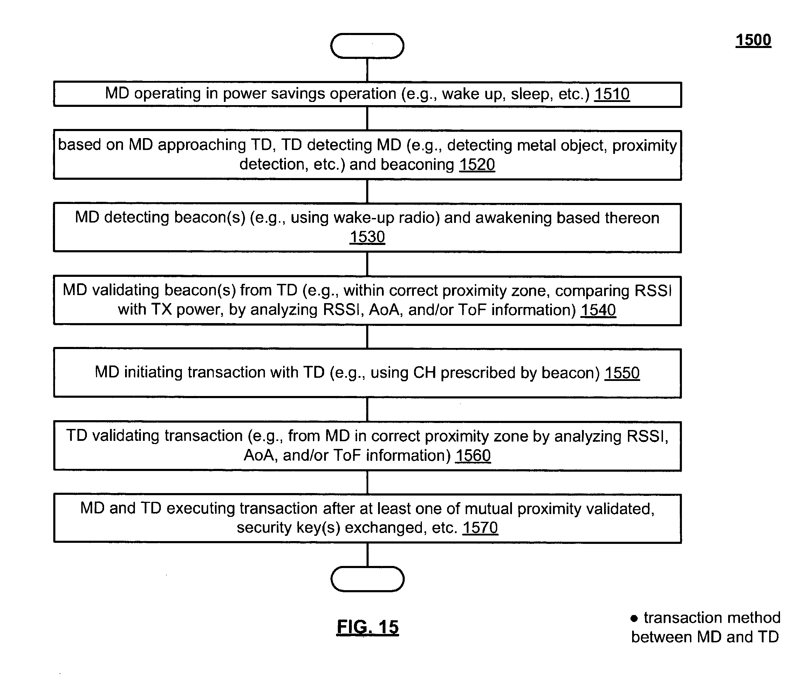

FIG. 15 is a diagram illustrating an embodiment of a method 1500 for operating one or more wireless communication devices.

As may be understood with respect to this diagram, the method 1500 operates initially by mobile device operating in a power savings operation (e.g., wake up, sleep, etc.), as shown in a block 1510. Generally speaking, when a user effectuates an appropriate motion of the mobile device with respect to the terminal device, the mobile device may initially be within a reduced power mode or a sleep mode.

Then, based on the mobile device approaching a terminal device, the terminal device operates by detecting the mobile device (e.g., by detecting a metal object, by using any desired proximity detection means such as those described herein, etc.) and the terminal device operates by beginning (e.g., by transmitting one or more beacons which may be detected by the mobile device), as shown in a block 1520.

Then, the mobile device operates by detecting the one or more beacons (e.g., such as using a wake-up radio within the mobile device) and awakening based thereon, as shown in a block 1530. After awakening from a reduced power mode or a sleep mode, the mobile device may operate by receiving a subsequent beacon from the terminal device. The mobile device then operates by validating the one or more beacons received from the terminal device using any one or more desired means, as shown in a block 1540. For example, such determination may be effectuated by comparing signal strength or RSSI with the transmit power information provided within the beacon in certain embodiments. In other embodiments, operations may be effectuated by analyzing RSSI, AoA, and/or ToF information such as described elsewhere herein with respect to various embodiments and/or diagrams.

The method 1500 then operates such that the mobile device operates by initiating a transaction with the terminal device (e.g., using a channel prescribed by a particular beacon received from the terminal device), as shown in a block 1550. The selection of the appropriate channel by which such a transaction should be effectuated may be selected to minimize mutual interference with any other respective communications that may be occurring or scheduled to occur between other respective communication devices within the operational environment.

Then, the terminal device operates by validating the transaction, as shown in a block 1560. The terminal device may validate such a transaction as appropriately being from a given mobile device within the appropriate or correct proximity zone by analyzing RSSI, AoA, and/or ToF information associated with communications between that mobile device and the terminal device. Once mutual proximity is a validated (e.g., using at least one of mutual proximity validation, secure key exchange, and/or any other desired secure communication verification means, etc.), the mobile device and the terminal device operate by executing the transaction, as shown in a block 1570.

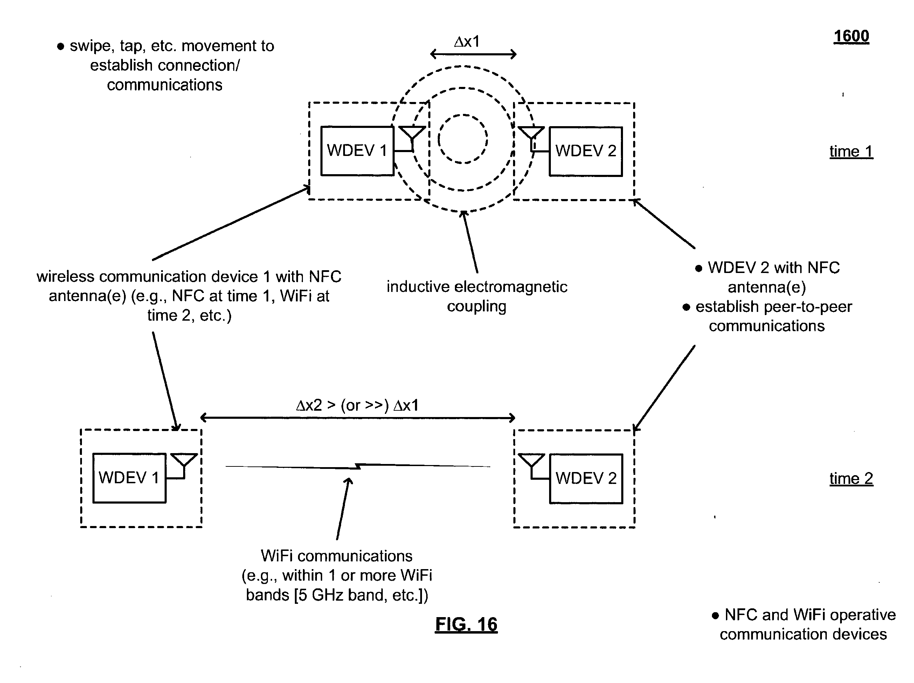

FIG. 16 is a diagram illustrating an embodiment 1600 of establishing and effectuating communications between respective wireless communication devices operation in accordance with NFC in accordance with Wi-Fi communications. It is also noted that the use of a tap, swipe, and/or any other predetermined motion of a given wireless communication device with respect to another wireless communication device may be employed for establishing connection and/or communication there between. For example, as may be seen with respect to this diagram, a given wireless communication device may include one or both of NFC and Wi-Fi communication capability. However, in such an alternative operation, instead of employing such a tap, swipe, and/or any other predetermined motion of a given communication device to effectuate a transaction, one or more other functions may be associated with such motion of the wireless communication device. In one instance, to effectuate peer-to-peer connection or communication between the first wireless communication device and the second wireless communication device, a tap, swipe, and/or any other predetermined motion of the first communication device with reference to the second communication device may serve as that action that initiates and establishes the connection or communication there between.

Generally speaking, the first wireless communication device and the second wireless communication device may be any desired type of devices operative to support wireless communications (e.g., including but not limited to those described with reference to FIG. 1 herein), and the use of such a tap, swipe, and/or any other predetermined motion of the first communication device with reference to the second communication device may serve as the means by which connection or communication there between is established. It is further noted that any of the various alternative embodiments and/or diagrams described herein related to different manners by which such a tap, swipe, and/or any other predetermined motion may be detected (e.g., NFC swipe detection, RSSI based proximity control, AoA based proximity control, ToF based proximity control, Hall effect based proximity control, etc., and/or any combination thereof and/or any other detection means, etc.) may be employed to establish connection or communication between respective wireless communication devices.

It is also noted that while certain implementations may have one or more security and/or authentication requirements to effectuate connection or communication (e.g., username, password, encryption and/or security key, and/or other settings, etc.), it is noted that the use of such a tap, swipe, and/or any other predetermined motion of the first communication device with reference to the second communication device may serve as the security and/or authentication requirement itself. As may be understood, the use of such a tap, swipe, and/or any other predetermined motion of the first communication device with reference to the second communication device may obviate any requirement to perform a number of user interactive operations to establish connection or communication (e.g., performance a scan to identify available wireless communication devices with which one can connect, one of the available wireless communication devices, set or enter any of a number of security and/or authentication requirements, etc.).

As may also be understood, there may be certain instances in which there may be a requirement for a user to perform certain interactive operations to establish connection or communication (e.g., during a first connection or communication between two respective devices). In such instances, while there may be a one-time requirement for a user to perform such interactive operations to effectuate connection or communication from a first wireless communication device to a second wireless communication device, subsequent connection or communications between the first and second wireless communication device may be established by the use of a tap, swipe, and/or any other predetermined motion of the first communication device with reference to the second communication device. Of course, there may be certain instances in which connection or communications between the first and second wireless communication device may be established by the use of a tap, swipe, and/or any other predetermined motion of the first communication device with reference to the second communication device without any one time requirement for user to perform any such interactive operations of all.

As may also be understood respect to this diagram, the interaction between the respective wireless communication devices may be different at different respective times (e.g., NFC at her during a first time, Wi-Fi at or during a second time, etc.).

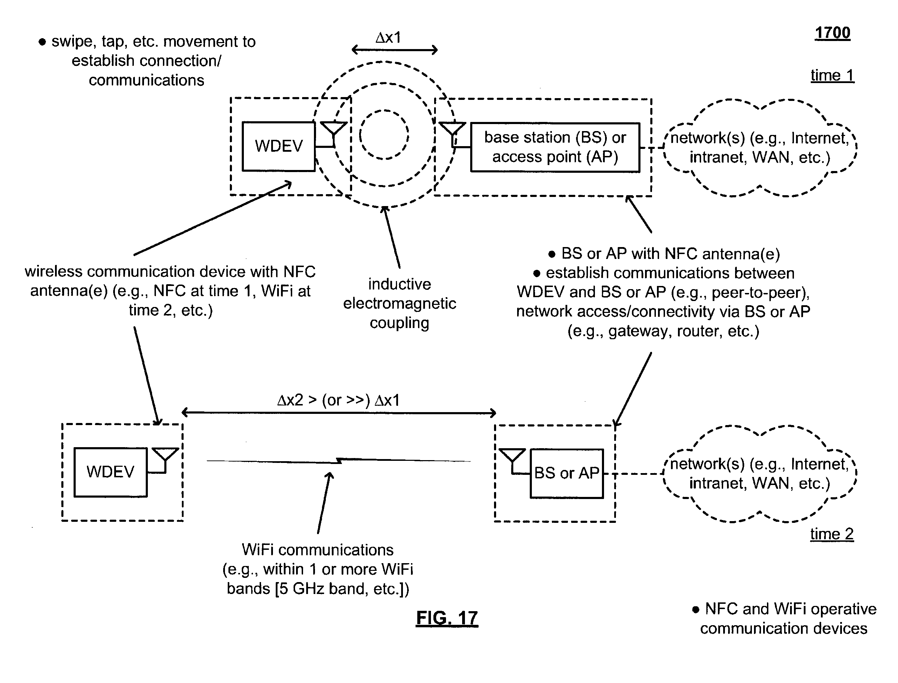

FIG. 17 is a diagram illustrating an embodiment 1700 of establishing and effectuating communications between respective wireless communication devices operation in accordance with NFC in accordance with Wi-Fi communications and for achieving network access via at least one of the wireless communication devices. As may be understood with respect to this diagram, connectivity from a given wireless communication device (e.g., again, as with other embodiments and/or diagrams, which may be any desired type of devices operative to support wireless communications such as including but not limited to those described with reference to FIG. 1 herein), connectivity or communication between a given wireless communication device and a network coordinator type device such as a base station (BS) or an access point (AP) may be established by the use of a tap, swipe, and/or any other predetermined motion of the wireless communication device with reference to network coordinator type device (e.g., BS, AP, etc.). That is to say, while peer-to-peer communication may be established between the wireless communication device and the network coordinator type device, the network coordinator type device may serve as a gateway or portal via which the wireless communication device may gain access to one or more networks (e.g., Internet, intranet, wide area network (WAN), satellite network, cellular network, WiMAX network, and/or any other type of network with which the network coordinator type device may interact via any of a number of communication means including wireless, wired, optical, satellite, cellular, etc.).

For example, in such an alternative implementation, the use of a tap, swipe, and/or any other predetermined motion of the wireless communication device with reference to network coordinator type device may serve not only to establish connection or communication between the wireless communication device and the network coordinator type device, but this may also serve as a means by which the wireless communication device may gain access to one or more networks.

In addition, in certain desired embodiments, the use of such a tap, swipe, and/or any other predetermined motion of the communication device with reference to the network coordinator type device may obviate any requirement to perform a number of user interactive operations to establish connection or communication with the network coordinator type device and or one or more networks which may be accessed via the network coordinator type device (e.g., performance a scan to identify available wireless communication devices with which one can connect, one of the available wireless communication devices, set or enter any of a number of security and/or authentication requirements, etc.). That is to say, the use of such a tap, swipe, and/or any other predetermined motion of the communication device with reference to the network coordinator type device may serve as the means by which connection or communication is not only established between the wireless communication device in the network coordinator type device, but also the means by which connection or communication is established between the wireless communication device and one or more networks via the network coordinator type device.

That is to say, while there may be two separate respective levels of authentication and/or security (e.g., a first level with respect to the network coordinator type device and a second level with respect to a given network accessed via the network coordinator type device), the use of such a tap, swipe, and/or any other predetermined motion of the communication device with reference to the network coordinator type device may serve to provide the appropriate authentication and/or security requirements for one or both of those respective communication links (e.g., not only with respect to connection or communication with the network coordinator type device but also with respect to connection or communication with one or more networks).

Analogously as described with respect other embodiments under diagrams, there may be certain instances or implementations in which there may be a one-time requirement of a user to enter or provide certain authentication and/or security information (e.g., username, password, encryption and/or security key, and/or other settings, etc.), and such information may be appropriately saved within the wireless communication device and/or the network coordinator type device so that subsequent connection or communication between the wireless communication device and the network coordinator type device, as well as any required authentication and/or security, may be established by the use of a tap, swipe, and/or any other predetermined motion of the communication device with reference to the network coordinator type device.

As may also be understood respect to this diagram, the interaction between the wireless communication device and the network coordinator type device may be different at different respective times (e.g., NFC at her during a first time, Wi-Fi at or during a second time, etc.). For example, while connection or communication with such a network coordinator type device (e.g., BS, AP, etc.) will typically be performed in accordance with Wi-Fi, such a network coordinator type device may include one or more NFC antennae, and interaction between the wireless communication device and the network coordinator type device may be performed in accordance with such NFC communications at certain times as may be desired in alternative embodiments.

Generally speaking, as may be understood with respect to certain applications, the use of a tap, swipe, and/or any other predetermined motion of one communication device with respect to another communication device (e.g., whether that be with respect to NFC, Wi-Fi, etc. and whether detection of that operation is in accordance with any such desired manner including NFC swipe detection, RSSI based proximity control, AoA based proximity control, ToF based proximity control, Hall effect based proximity control, etc., and/or any combination thereof and/or any other detection means, etc.), such an operation may serve to establish connection or communication between the respective communication devices and including providing for access to one or more networks which may be accessible via one of the communication devices. Again, various embodiments may operate somewhat differently (e.g., a first embodiment in which the operation alone serves as the means by which to establish connection or communication including providing any authentication and/or security requirements, a second embodiment in which such authentication and/or security requirements must be provided at least one time and then subsequent connection or communication may be established by the operation alone, etc.).

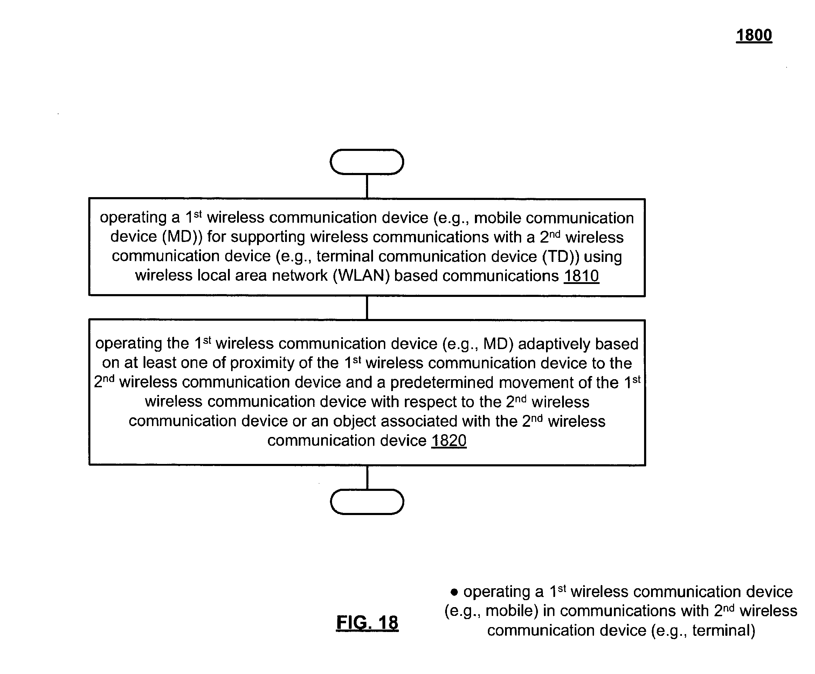

FIG. 18, FIG. 19A, FIG. 19B, FIG. 20A, and FIG. 20B are diagrams illustrating embodiments of methods for operating one or more wireless communication devices.

Referring to method 1800 of FIG. 18, the method 1800 begins by operating a 1^{st} wireless communication device (e.g., mobile communication device (MD)) for supporting wireless communications with a 2^{nd} wireless communication device (e.g., terminal communication device (TD)) using wireless local area network (WLAN) based communications, as shown in a block 1810.

The method 1800 continues by operating the 1^{st} wireless communication device (e.g., MD) adaptively based on at least one of proximity of the 1^{st} wireless communication device to the 2^{nd} wireless communication device and a predetermined movement of the 1^{st} wireless communication device with respect to the 2^{nd} wireless communication device or an object associated with the 2^{nd} wireless communication device, as shown in a block 1820.

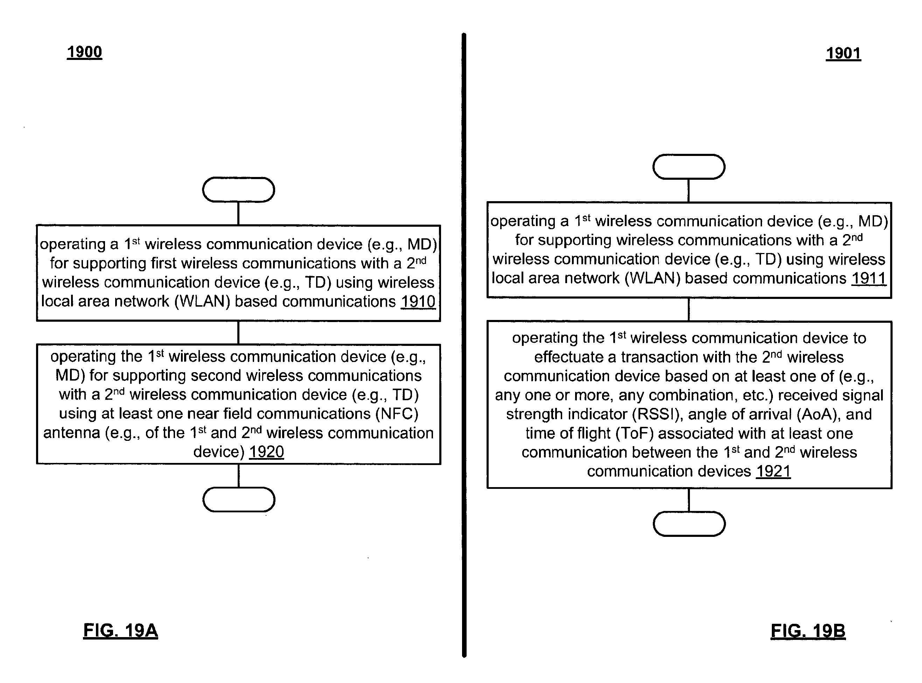

Referring to method 1900 of FIG. 19A, the method 1900 begins by operating a 1^{st} wireless communication device (e.g., MD) for supporting first wireless communications with a 2^{nd} wireless communication device (e.g., TD) using wireless local area network (WLAN) based communications, as shown in a block 1910.

The method 1900 continues by operating the 1^{st} wireless communication device (e.g., MD) for supporting second wireless communications with a 2^{nd} wireless communication device (e.g., TD) using at least one near field communications (NFC) antenna (e.g., of the 1^{st} and 2^{nd} wireless communication device), as shown in a block 1920.

Referring to method 1901 of FIG. 19B, the method 1901 begins by operating a 1^{st} wireless communication device (e.g., MD) for supporting wireless communications with a 2^{nd} wireless communication device (e.g., TD) using wireless local area network (WLAN) based communications, as shown in a block 1911.

The method 1901 then operates by operating the 1^{st} wireless communication device to effectuate a transaction with the 2^{nd} wireless communication device based on at least one of (e.g., any one or more, any combination, etc.) received signal strength indicator (RSSI), angle of arrival (AoA), and time of flight (ToF) associated with at least one communication between the 1^{st} and 2^{nd} wireless communication devices, as shown in a block 1921.

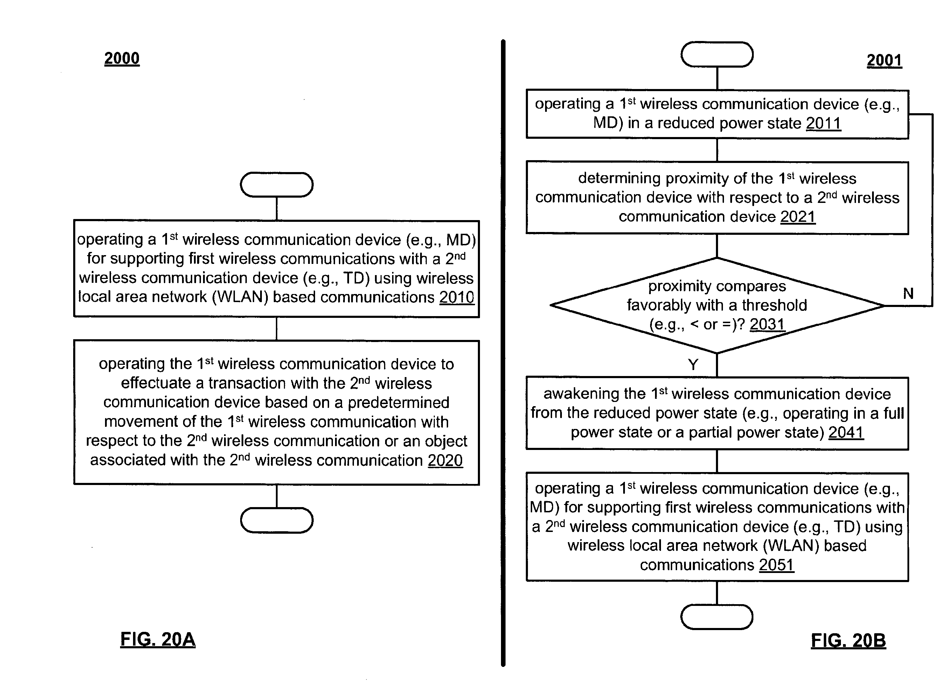

Referring to method 2000 of FIG. 20A, the method 2000 begins by operating a 1^{st} wireless communication device (e.g., MD) for supporting first wireless communications with a 2^{nd} wireless communication device (e.g., TD) using wireless local area network (WLAN) based communications, as shown in a block 2010.

The method 2000 continues by operating the 1^{st} wireless communication device to effectuate a transaction with the 2^{nd} wireless communication device based on a predetermined movement of the 1^{st} wireless communication with respect to the 2^{nd} wireless communication or an object associated with the 2^{nd} wireless communication, as shown in a block 2020.

Referring to method 2001 of FIG. 20B, the method 2001 begins by operating a 1^{st} wireless communication device (e.g., MD) in a reduced power state, as shown in a block 2011. The method 2001 then operates by determining proximity of the 1^{st} wireless communication device with respect to a 2^{nd} wireless communication device, as shown in a block 2021.

The method 2001 continues by determining whether or not the proximity compares favorably with a threshold (e.g., less than or equal [< or =]), as shown in a decision block 2031.

If it is determined that the proximity does not compares favorably with a threshold (e.g., the 1^{st} wireless communication device is not within a sufficiently close proximity to the 2^{nd} wireless communication device), then the method 2001 operates by continuing to operate the operations of the block 2011.

However, if it is determined that the proximity does in fact compare favorably with the threshold (e.g., the 1^{st} wireless communication device is within a sufficiently close proximity to the 2^{nd} wireless communication device), then the method 2001 operates by awakening the 1^{st} wireless communication device from the reduced power state (e.g., operating in a full power state or a partial power state), as shown in a block 2041.

The method 2001 then operates by operating a 1^{st} wireless communication device (e.g., MD) for supporting first wireless communications with a 2^{nd} wireless communication device (e.g., TD) using wireless local area network (WLAN) based communications, as shown in a block 2051.

It is also noted that the various operations and functions as described with respect to various methods herein may be performed within a wireless communication device, such as using a baseband processing module and/or a processing module implemented therein, (e.g., such as in accordance with the baseband processing module 64 and/or the processing module 50 as described with reference to FIG. 2) and/or other components therein including one of more baseband processing modules, one or more media access control (MAC) layers, one or more physical layers (PHYs), and/or other components, etc. For example, such a baseband processing module can generate such signals and frames as described herein as well as perform various operations and analyses as described herein, or any other operations and functions as described herein, etc. or their respective equivalents.

In some embodiments, such a baseband processing module and/or a processing module (which may be implemented in the same device or separate devices) can perform such processing to generate signals for transmission using at least one of any number of radios and at least one of any number of antennae to another wireless communication device (e.g., which also may include at least one of any number of radios and at least one of any number of antennae) in accordance with various aspects of the invention, and/or any other operations and functions as described herein, etc. or their respective equivalents. In some embodiments, such processing is performed cooperatively by a processing module in a first device, and a baseband processing module within a second device. In other embodiments, such processing is performed wholly by a baseband processing module or a processing module.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As may also be used herein, the terms "processing module", "module", "processing circuit", and/or "processing unit" (e.g., including various modules and/or circuitries such as may be operative, implemented, and/or for encoding, for decoding, for baseband processing, etc.) may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may have an associated memory and/or an integrated memory element, which may be a single memory device, a plurality of memory devices, and/or embedded circuitry of the processing module, module, processing circuit, and/or processing unit. Such a memory device may be a read-only memory (ROM), random access memory (RAM), volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a functional block that is implemented via hardware to perform one or module functions such as the processing of one or more input signals to produce one or more output signals. The hardware that implements the module may itself operate in conjunction software, and/or firmware. As used herein, a module may contain one or more sub-modules that themselves are modules.

While particular combinations of various functions and features of the present invention have been expressly described herein, other combinations of these features and functions are likewise possible. The present invention is not limited by the particular examples disclosed herein and expressly incorporates these other combinations.

Mode Selection Tables:

**Table 1: 2.4 GHz, 20/22 MHz channel BW, 54 Mbps max bit rate**

| ***Rate*** | ***Modulation*** | ***Code Rate*** | ***NBPSC*** | ***NCBPS*** | ***NDBPS*** | ***EVM*** | ***Sensitivity*** | ***ACR*** | ***AACR*** |
|---|---|---|---|---|---|---|---|---|---|
| | **Barker** | | | | | | | | |
| 1 | BPSK | | | | | | | | |
| | Barker | | | | | | | | |
| 2 | QPSK | | | | | | | | |
| 5.5 | CCK | | | | | | | | |
| 6 | BPSK | 0.5 | 1 | 48 | 24 | -5 | -82 | 16 | 32 |
| 9 | BPSK | 0.75 | 1 | 48 | 36 | -8 | -81 | 15 | 31 |
| 11 | CCK | | | | | | | | |
| 12 | QPSK | 0.5 | 2 | 96 | 48 | -10 | -79 | 13 | 29 |
| 18 | QPSK | 0.75 | 2 | 96 | 72 | -13 | -77 | 11 | 27 |
| 24 | 16-QAM | 0.5 | 4 | 192 | 96 | -16 | -74 | 8 | 24 |
| 36 | 16-QAM | 0.75 | 4 | 192 | 144 | -19 | -70 | 4 | 20 |
| 48 | 64-QAM | 0.666 | 6 | 288 | 192 | -22 | -66 | 0 | 16 |
| 54 | 64-QAM | 0.75 | 6 | 288 | 216 | -25 | -65 | -1 | 15 |

**Table 2: Channelization for Table 1**

| ***Channel*** | ***Frequency (MHz)*** |
|---|---|
| 1 | 2412 |
| 2 | 2417 |
| 3 | 2422 |
| 4 | 2427 |
| 5 | 2432 |
| 6 | 2437 |
| 7 | 2442 |
| 8 | 2447 |
| 9 | 2452 |
| 10 | 2457 |
| 11 | 2462 |
| 12 | 2467 |

**Table 3: Power Spectral Density (PSD) Mask for Table 1**

| ***PSD Mask*** | ***1*** |
|---|---|
| Frequency Offset | dBr |
| -9 MHz to 9 MHz | 0 |
| + / - 11 MHz | -20 |
| + / - 20 MHz | -28 |
| + / - 30 MHz and greater | -50 |

**Table 4: 5 GHz, 20 MHz channel BW, 54 Mbps max bit rate**

| ***Rate*** | ***Modulation*** | ***Code Rate*** | ***NBPSC*** | ***NCBPS*** | ***NDBPS*** | ***EVM*** | ***Sensitivity*** | ***ACR*** | ***AACR*** |
|---|---|---|---|---|---|---|---|---|---|
| 6 | BPSK | 0.5 | 1 | 48 | 24 | -5 | -82 | 16 | 32 |
| 9 | BPSK | 0.75 | 1 | 48 | 36 | -8 | -81 | 15 | 31 |
| 12 | QPSK | 0.5 | 2 | 96 | 48 | -10 | -79 | 13 | 29 |
| 18 | QPSK | 0.75 | 2 | 96 | 72 | -13 | -77 | 11 | 27 |
| 24 | 16-QAM | 0.5 | 4 | 192 | 96 | -16 | -74 | 8 | 24 |
| 36 | 16-QAM | 0.75 | 4 | 192 | 144 | -19 | -70 | 4 | 20 |
| 48 | 64-QAM | 0.666 | 6 | 288 | 192 | -22 | -66 | 0 | 16 |
| 54 | 64-QAM | 0.75 | 6 | 288 | 216 | -25 | -65 | -1 | 15 |

**Table 5: Channelization for Table 4**

| ***Channel*** | ***Frequency (MHz)*** | ***Country*** | ***Channel*** | ***Frequency (MHz)*** | ***Country*** |
|---|---|---|---|---|---|
| 240 | 4920 | Japan | | | |
| 244 | 4940 | Japan | | | |
| 248 | 4960 | Japan | | | |
| 252 | 4980 | Japan | | | |
| 8 | 5040 | Japan | | | |
| 12 | 5060 | Japan | | | |
| 16 | 5080 | Japan | | | |
| 36 | 5180 | USA/Europe | 34 | 5170 | Japan |
| 40 | 5200 | USA/Europe | 38 | 5190 | Japan |
| 44 | 5220 | USA/Europe | 42 | 5210 | Japan |
| 48 | 5240 | USA/Europe | 46 | 5230 | Japan |
| 52 | 5260 | USA/Europe | | | |
| 56 | 5280 | USA/Europe | | | |
| 60 | 5300 | USA/Europe | | | |
| 64 | 5320 | USA/Europe | | | |
| 100 | 5500 | USA/Europe | | | |
| 104 | 5520 | USA/Europe | | | |
| 108 | 5540 | USA/Europe | | | |
| 112 | 5560 | USA/Europe | | | |
| 116 | 5580 | USA/Europe | | | |
| 120 | 5600 | USA/Europe | | | |
| 124 | 5620 | USA/Europe | | | |
| 128 | 5640 | USA/Europe | | | |
| 132 | 5660 | USA/Europe | | | |
| 136 | 5680 | USA/Europe | | | |
| 140 | 5700 | USA/Europe | | | |
| 149 | 5745 | USA | | | |
| 153 | 5765 | USA | | | |
| 157 | 5785 | USA | | | |
| 161 | 5805 | USA | | | |
| 165 | 5825 | USA | | | |

**Table 6: 2.4 GHz, 20 MHz channel BW, 192 Mbps max bit rate**

| ***Rate*** | ***TX Antennas*** | ***ST Code Rate*** | ***Modulation*** | ***Code Rate*** | ***NBPSC*** | ***NCBPS*** | ***NDBPS*** |
|---|---|---|---|---|---|---|---|
| 12 | 2 | 1 | BPSK | 0.5 | 1 | 48 | 24 |
| 24 | 2 | 1 | QPSK | 0.5 | 2 | 96 | 48 |
| 48 | 2 | 1 | 16-QAM | 0.5 | 4 | 192 | 96 |
| 96 | 2 | 1 | 64-QAM | 0.666 | 6 | 288 | 192 |
| 108 | 2 | 1 | 64-QAM | 0.75 | 6 | 288 | 216 |
| 18 | 3 | 1 | BPSK | 0.5 | 1 | 48 | 24 |
| 36 | 3 | 1 | QPSK | 0.5 | 2 | 96 | 48 |
| 72 | 3 | 1 | 16-QAM | 0.5 | 4 | 192 | 96 |
| 144 | 3 | 1 | 64-QAM | 0.666 | 6 | 288 | 192 |
| 162 | 3 | 1 | 64-QAM | 0.75 | 6 | 288 | 216 |
| 24 | 4 | 1 | BPSK | 0.5 | 1 | 48 | 24 |
| 48 | 4 | 1 | QPSK | 0.5 | 2 | 96 | 48 |
| 96 | 4 | 1 | 16-QAM | 0.5 | 4 | 192 | 96 |
| 192 | 4 | 1 | 64-QAM | 0.666 | 6 | 288 | 192 |
| 216 | 4 | 1 | 64-QAM | 0.75 | 6 | 288 | 216 |

**Table 7: Channelization for Table 6**

| ***Channel*** | ***Frequency (MHz)*** |
|---|---|
| 1 | 2412 |
| 2 | 2417 |
| 3 | 2422 |
| 4 | 2427 |
| 5 | 2432 |
| 6 | 2437 |
| 7 | 2442 |
| 8 | 2447 |
| 9 | 2452 |
| 10 | 2457 |
| 11 | 2462 |
| 12 | 2467 |

**Table 8: 5 GHz, 20 MHz channel BW, 192 Mbps max bit rate**

| ***Rate*** | ***TX Antennas*** | ***ST Code Rate*** | ***Modulation*** | ***Code Rate*** | ***NBPSC*** | ***NCBPS*** | ***NDBPS*** |
|---|---|---|---|---|---|---|---|
| 12 | 2 | 1 | BPSK | 0.5 | 1 | 48 | 24 |
| 24 | 2 | 1 | QPSK | 0.5 | 2 | 96 | 48 |
| 48 | 2 | 1 | 16-QAM | 0.5 | 4 | 192 | 96 |
| 96 | 2 | 1 | 64-QAM | 0.666 | 6 | 288 | 192 |
| 108 | 2 | 1 | 64-QAM | 0.75 | 6 | 288 | 216 |
| 18 | 3 | 1 | BPSK | 0.5 | 1 | 48 | 24 |
| 36 | 3 | 1 | QPSK | 0.5 | 2 | 96 | 48 |
| 72 | 3 | 1 | 16-QAM | 0.5 | 4 | 192 | 96 |
| 144 | 3 | 1 | 64-QAM | 0.666 | 6 | 288 | 192 |
| 162 | 3 | 1 | 64-QAM | 0.75 | 6 | 288 | 216 |
| 24 | 4 | 1 | BPSK | 0.5 | 1 | 48 | 24 |
| 48 | 4 | 1 | QPSK | 0.5 | 2 | 96 | 48 |
| 96 | 4 | 1 | 16-QAM | 0.5 | 4 | 192 | 96 |
| 192 | 4 | 1 | 64-QAM | 0.666 | 6 | 288 | 192 |
| 216 | 4 | 1 | 64-QAM | 0.75 | 6 | 288 | 216 |

**Table 9: channelization for Table 8**

| ***Channel*** | ***Frequency (MHz)*** | ***Country*** | ***Channel*** | ***Frequency (MHz)*** | ***Country*** |
|---|---|---|---|---|---|
| 240 | 4920 | Japan | | | |
| 244 | 4940 | Japan | | | |
| 248 | 4960 | Japan | | | |
| 252 | 4980 | Japan | | | |
| 8 | 5040 | Japan | | | |
| 12 | 5060 | Japan | | | |
| 16 | 5080 | Japan | | | |
| 36 | 5180 | USA/Europe | 34 | 5170 | Japan |
| 40 | 5200 | USA/Europe | 38 | 5190 | Japan |
| 44 | 5220 | USA/Europe | 42 | 5210 | Japan |
| 48 | 5240 | USA/Europe | 46 | 5230 | Japan |
| 52 | 5260 | USA/Europe | | | |
| 56 | 5280 | USA/Europe | | | |
| 60 | 5300 | USA/Europe | | | |
| 64 | 5320 | USA/Europe | | | |
| 100 | 5500 | USA/Europe | | | |
| 104 | 5520 | USA/Europe | | | |
| 108 | 5540 | USA/Europe | | | |
| 112 | 5560 | USA/Europe | | | |
| 116 | 5580 | USA/Europe | | | |
| 120 | 5600 | USA/Europe | | | |
| 124 | 5620 | USA/Europe | | | |
| 128 | 5640 | USA/Europe | | | |
| 132 | 5660 | USA/Europe | | | |
| 136 | 5680 | USA/Europe | | | |
| 140 | 5700 | USA/Europe | | | |
| 149 | 5745 | USA | | | |
| 153 | 5765 | USA | | | |
| 157 | 5785 | USA | | | |
| 161 | 5805 | USA | | | |
| 165 | 5825 | USA | | | |

**Table 10: 5 GHz, with 40 MHz channels and max bit rate of 486 Mbps**

| ***Rate*** | ***TX Antennas*** | ***ST Code Rate*** | ***Modulation*** | ***Code Rate*** | ***NBPSC*** |
|---|---|---|---|---|---|
| 13.5 Mbps | 1 | 1 | BPSK | 0.5 | 1 |
| 27 Mbps | 1 | 1 | QPSK | 0.5 | 2 |
| 54 Mbps | 1 | 1 | 16-QAM | 0.5 | 4 |
| 108 Mbps | 1 | 1 | 64-QAM | 0.666 | 6 |
| 121.5 Mbps | 1 | 1 | 64-QAM | 0.75 | 6 |
| 27 Mbps | 2 | 1 | BPSK | 0.5 | 1 |
| 54 Mbps | 2 | 1 | QPSK | 0.5 | 2 |
| 108 Mbps | 2 | 1 | 16-QAM | 0.5 | 4 |
| 216 Mbps | 2 | 1 | 64-QAM | 0.666 | 6 |
| 243 Mbps | 2 | 1 | 64-QAM | 0.75 | 6 |
| 40.5 Mbps | 3 | 1 | BPSK | 0.5 | 1 |
| 81 Mbps | 3 | 1 | QPSK | 0.5 | 2 |
| 162 Mbps | 3 | 1 | 16-QAM | 0.5 | 4 |
| 324 Mbps | 3 | 1 | 64-QAM | 0.666 | 6 |
| 365.5 Mbps | 3 | 1 | 64-QAM | 0.75 | 6 |
| 54 Mbps | 4 | 1 | BPSK | 0.5 | 1 |
| 108 Mbps | 4 | 1 | QPSK | 0.5 | 2 |
| 216 Mbps | 4 | 1 | 16-QAM | 0.5 | 4 |
| 432 Mbps | 4 | 1 | 64-QAM | 0.666 | 6 |
| 486 Mbps | 4 | 1 | 64-QAM | 0.75 | 6 |

**Table 11: Power Spectral Density (PSD) mask for Table 10**

| ***PSD Mask*** | ***2*** |
|---|---|
| Frequency Offset | dBr |
| -19 MHz to 19 MHz | 0 |
| + / - 21 MHz | -20 |
| + / - 30 MHz | -28 |
| + / - 40 MHz and | -50 |
| greater | |

**Table 12: Channelization for Table 10**

| ***Channel*** | ***Frequency (MHz)*** | ***Country*** | ***Channel*** | ***Frequency (MHz)*** | ***County*** |
|---|---|---|---|---|---|
| 242 | 4930 | Japan | | | |
| 250 | 4970 | Japan | | | |
| 12 | 5060 | Japan | | | |
| 38 | 5190 | USA/Europe | 36 | 5180 | Japan |
| 46 | 5230 | USA/Europe | 44 | 5520 | Japan |
| 54 | 5270 | USA/Europe | | | |
| 62 | 5310 | USA/Europe | | | |
| 102 | 5510 | USA/Europe | | | |
| 110 | 5550 | USA/Europe | | | |
| 118 | 5590 | USA/Europe | | | |
| 126 | 5630 | USA/Europe | | | |
| 134 | 5670 | USA/Europe | | | |
| 151 | 5755 | USA | | | |
| 159 | 5795 | USA | | | |

## Claims

1. An apparatus, comprising:
a mobile communication device (MD) to support wireless communications with a terminal communication device (TD) using wireless local area network (WLAN) based communications; and wherein:
the MD to operate adaptively based on at least one of proximity of the MD to the TD and a predetermined movement of the MD with respect to the TD or an object associated with the TD.

2. The apparatus of claim 1, wherein:
the MD including at least one near field communications (NFC) antenna; and
the MD to support at least one additional wireless communication with the TD using the at least one NFC antenna.

3. The apparatus of claim 1 or 2, wherein:
the WLAN communications being compliant in accordance with at least one IEEE 802.11 standard.

4. The apparatus of any preceding claim, wherein:
the MD to effectuate a transaction with the TD based on the predetermined movement of the MD with respect to the TD or an object associated with the TD.

5. The apparatus of any preceding claim, wherein:
the MD to effectuate a transaction with the TD based on at least one of received signal strength indicator (RSSI), angle of arrival (AoA), and time of flight (ToF) associated with at least one communication between the MD and the TD.

6. The apparatus of any preceding claim, wherein:
the MD to effectuate a transaction with the TD based on at least one of a Hall effect voltage induced within at least one of the MD and TD based on a distance between the MD and TD and angle of arrival (AoA) associated with at least one communication between the MD and the TD.

7. The apparatus of any preceding claim, wherein:
the MD to awaken from a reduced power state based on the proximity of the MD to the TD being less than or equal to a threshold.

8. The apparatus of any preceding claim, wherein:
the MD is a cellular telephone, a smart phone, or a personal digital assistant (PDA); and
the TD is or is associated with a point of sale (POS) device.

9. An apparatus, comprising:
a mobile communication device (MD) to support wireless communications with a terminal communication device (TD) using wireless local area network (WLAN) based communications being compliant in accordance with at least one IEEE 802.11 standard; and wherein:
the MD to operate adaptively based on proximity of the MD to the TD and a predetermined movement of the MD with respect to the TD or an object associated with the TD and to effectuate a transaction with the TD based on the predetermined movement of the MD with respect to the TD or an object associated with the TD; and
the MD operative to awaken from a reduced power state based on the proximity of the MD to the TD being less than or equal to a threshold and to enter into the reduced power state based on the proximity of the MD to the TD being greater than the threshold or at least one additional threshold.

10. A method for operating a mobile communication device (MD), the method comprising:
supporting wireless communications with a terminal communication device (TD) using wireless local area network (WLAN) based communications; and
operating adaptively based on at least one of proximity of the MD to the TD and a predetermined movement of the MD with respect to the TD or an object associated with the TD.

11. The method of claim 10, wherein:
the MD including at least one near field communications (NFC) antenna; and further comprising:
operating the MD to support at least one additional wireless communication with the TD using the at least one NFC antenna.

12. The method of claim 10 or 11, wherein:
the WLAN communications being compliant in accordance with at least one IEEE 802.11 standard; and further comprising:
operating the MD to awaken from a reduced power state based on the proximity of the MD to the TD being less than or equal to a threshold and to enter into the reduced power state based on the proximity of the MD to the TD being greater than the threshold or at least one additional threshold.

13. The method of any of claims 10 to 12, wherein:
operating the MD to effectuate a transaction with the TD based on the predetermined movement of the MD with respect to the TD or an object associated with the TD.

14. The method of any of claims 10 to 13, further comprising:
operating the MD to effectuate a transaction with the TD based on at least one of received signal strength indicator (RSSI), angle of arrival (AoA), and time of flight (ToF) associated with at least one communication between the MD and the TD.

15. The method of any of claims 10 to 14, further comprising:
operating the MD to effectuate a transaction with the TD based on at least one of a Hall effect voltage induced within at least one of the MD and TD based on a distance between the MD and TD and angle of arrival (AoA) associated with at least one communication between the MD and the TD.
